# EUROPEAN PATENT APPLICATION

(11) **EP 4 521 839 A1**
(43) Date of publication of application: **12.03.2025**
(21) Application number: 23823183.1
(22) Date of filing: 14.06.2023
(51) Int. Cl.: H04W 72/231

(54) **FREQUENCY-DOMAIN RESOURCE CONFIGURATION METHOD AND APPARATUS**

(30) Priority: 15.06.2022 CN 202210673269; 07.04.2023 CN 202310404201
(71) Applicant: Huawei Technologies Co., Ltd., Shenzhen, Guangdong 518129 (CN)
(72) Inventor: YUAN, Shitong, Shenzhen, Guangdong 518129 (CN)
(74) Representative: Pfenning, Meinig & Partner mbB
(86) International application number: PCT/CN2023/100160
(87) International publication number: WO 2023/241617

(57) **Abstract**

A frequency domain resource configuration method and an apparatus are provided. The method may include: receiving first configuration information from a first network device, where the first configuration information is for configuring a first frequency domain resource set, and the first frequency domain resource set takes effect after a terminal device is handed over from a source cell to a target cell, so that the terminal device can enable or use the first frequency domain resource set after being handed over to the target cell; receiving handover indication signaling from the first network device, where the handover indication signaling indicates the handover from the source cell to the target cell; and determining an activated frequency domain resource based on the first frequency domain resource set, so that the activated frequency domain resource can be quickly determined.

## Description

This application claims priority to Chinese Patent Application No. 202210673269.0, filed with the China National Intellectual Property Administration on June 15, 2022 and entitled "FREQUENCY DOMAIN RESOURCE CONFIGURATION METHOD AND APPARATUS", which is incorporated herein by reference in its entirety. This application claims priority to Chinese Patent Application No. 202310404201.7, filed with the China National Intellectual Property Administration on April 7, 2023 and entitled "FREQUENCY DOMAIN RESOURCE CONFIGURATION METHOD AND APPARATUS", which is incorporated herein by reference in its entirety.

### TECHNICAL FIELD

This application relates to the field of communication technologies, and in particular, to a frequency domain resource configuration method and an apparatus.

### BACKGROUND

In a communication system, a network device may send, to a terminal device, radio resource control (radio resource control, RRC) signaling that carries a handover command, to trigger the terminal device to be handed over from one cell to another cell, for example, handed over from a source cell to a target cell. The RRC signaling may further carry frequency domain resource configuration information of the target cell, where the configuration information is for configuring a frequency domain resource of the target cell and indicates whether the frequency domain resource of the target cell is activated after the handover to the target cell. For example, the RRC signaling includes an indication field. When the indication field indicates "activated", it indicates that an initial state of the frequency domain resource of the target cell after the handover to the target cell is an activated state. That is, the frequency domain resource of the target cell is activated after the handover. When the indication field indicates "deactivated", it indicates that an initial state of the frequency domain resource of the target cell after the handover to the target cell is a deactivated state. That is, the frequency domain resource of the target cell is deactivated after the handover.

If the RRC signaling indicates that the terminal device activates the frequency domain resource of the target cell after the handover to the target cell, but the network device cannot immediately schedule the terminal device to perform data transmission on the frequency domain resource of the target cell, when the terminal device completes uplink and downlink synchronization, and the network device receives channel state information (channel state information, CSI) that is of the frequency domain resource of the target cell and that is measured and reported by the terminal device, the network device schedules the terminal device to perform data transmission on the frequency domain resource of the target cell. Because delays in an uplink and downlink synchronization process and a measurement and report process are large, in a scenario in which the terminal device is handed over from the source cell to the target cell, how to quickly determine an activated frequency domain resource is an urgent technical problem to be resolved.

### SUMMARY

Embodiments of this application provide a frequency domain resource configuration method and an apparatus, so that an activated frequency domain resource can be quickly determined in a scenario in which a terminal device is handed over from a source cell to a target cell.

According to a first aspect, this application provides a frequency domain resource configuration method. The method may be performed by a terminal device or a module in the terminal device. The method includes: receiving first configuration information from a first network device (namely, a network device corresponding to a source cell), where the first configuration information is for configuring a first frequency domain resource set, and the first frequency domain resource set takes effect after a terminal device is handed over from the source cell to a target cell; receiving handover indication signaling from a first network device, where the handover indication signaling indicates the handover from the source cell to the target cell; and determining an activated frequency domain resource based on the first frequency domain resource set.

It can be learned that after being handed over from the source cell to the target cell, the terminal device can quickly determine the activated frequency domain resource based on the first frequency domain resource set, so that the terminal device can perform communication based on the activated frequency domain resource.

In a possible implementation, the first configuration information is further for configuring an identifier of the target cell associated with the first frequency domain resource set, so that the first frequency domain resource set takes effect after the terminal device is handed over from the source cell to the target cell.

In a possible implementation, the first configuration information is further for configuring a type identifier of the first frequency domain resource set, and the type identifier identifies that the first frequency domain resource set takes effect after the terminal device is handed over from the source cell to the target cell. The frequency domain resource set that takes effect after the handover to the target cell and a frequency domain resource set that takes effect in the source cell may be distinguished by using the type identifier.

In a possible implementation, the first frequency domain resource set is a subset of a second frequency domain resource set, or the first frequency domain resource set is a second frequency domain resource set, and the second frequency domain resource set takes effect in the source cell. After being handed over from the source cell to the target cell, the terminal device may support all or some frequency domain resource configurations in the source cell, to reduce a probability that a throughput decreases.

In a possible implementation, the method further includes: receiving transmission configuration indicator (transmission configuration indicator, TCI) indication signaling from the first network device, where the TCI indication signaling is associated with the first frequency domain resource set, the TCI indication signaling indicates a TCI state, and the TCI state is associated with the target cell.

In a possible implementation, the handover indication signaling is RRC signaling, and the TCI indication signaling is a first media access control-control element (media access control-control element, MAC-CE) or first downlink control information (downlink control information, DCI). That is, the RRC signaling indicates the cell handover, and the TCI indication signaling indicates the TCI state.

In a possible implementation, the TCI indication signaling is a second MAC-CE or second DCI, and the handover indication signaling is a third MAC-CE or third DCI; and the second MAC-CE is different from the third MAC-CE, and the second DCI is different from the third DCI. The TCI indication signaling and the handover indication signaling are carried in different MAC-CEs or different DCI. The TCI indication signaling indicates the TCI state, and the handover indication signaling indicates the cell handover. This helps improve flexibility.

In a possible implementation, the handover indication signaling includes TCI indication signaling, the TCI indication signaling is associated with the first frequency domain resource set, the TCI indication signaling indicates a TCI state, and the TCI state is associated with the target cell; and the handover indication signaling is a fourth MAC-CE or fourth DCI. In this manner, the handover indication signaling indicates both the cell handover and the TCI state, so that signaling overheads can be reduced.

In a possible implementation, the handover indication signaling further indicates that a frequency domain resource in the first frequency domain resource set is activated or deactivated, so that the terminal device determines the activated frequency domain resource.

In a possible implementation, the handover indication signaling includes a cell handover identifier, and the cell handover identifier indicates the cell handover, or indicates the handover to the target cell, to trigger the terminal device to be handed over from the source cell to the target cell.

In a possible implementation, the TCI indication signaling acts on a reference frequency domain resource in the first frequency domain resource set. In this case, the terminal device determines that all frequency domain resources in the first frequency domain resource set are activated frequency domain resources, and performs communication on all the frequency domain resources in the first frequency domain resource set by using the TCI state. Therefore, signaling overheads can be reduced, and communication can be quickly performed on the activated frequency domain resource in the TCI state.

In a possible implementation, the TCI indication signaling acts on a target frequency domain resource in the first frequency domain resource set, and the target frequency domain resource is a non-reference frequency domain resource. In this case, the terminal device determines that the target frequency domain resource is the activated frequency domain resource, and releases a frequency domain resource other than the target frequency domain resource in the first frequency domain resource set, to save frequency domain resources. The terminal device performs communication on the target frequency domain resource by using the TCI state, so that the communication is targeted.

In a possible implementation, when the activated frequency domain resource is determined based on the first frequency domain resource set, the activated frequency domain resource may be determined based on the first frequency domain resource set and the second frequency domain resource set, to reduce a probability that a throughput decreases.

In a possible implementation, the first configuration information includes a TCI state list of the first frequency domain resource set, where the TCI state list includes an uplink TCI state, and higher layer signaling indicates that a TCI mode of the first frequency domain resource set is a separate mode; or the TCI state list includes a downlink TCI state and/or an uplink and downlink joint TCI state, and higher layer signaling indicates that a TCI mode of the first frequency domain resource set is the separate mode.

In a possible implementation, the first configuration information includes a TCI mode of the first frequency domain resource set. In other words, the TCI mode of the first frequency domain resource set is explicitly indicated.

In a possible implementation, the first configuration information is configuration information of the source cell.

In a possible implementation, the first configuration information acts on a first reference frequency domain resource in the first frequency domain resource set, and TCI modes of all the first frequency domain resources in the first frequency domain resource set are the same as a TCI mode of the first reference frequency domain resource.

In a possible implementation, the handover indication signaling includes TCI indication information, and the TCI indication information indicates a plurality of TCI states.

Optionally, the TCI indication information further indicates, in the plurality of TCI states, a TCI state corresponding to a primary cell in the first frequency domain resource set.

Optionally, the TCI indication information further indicates that a TCI state of a first frequency domain resource in the first frequency domain resource set does not exist. In this case, the first frequency domain resource is not activated, where the first frequency domain resource corresponds to a default beam; or the first frequency domain resource is activated, where the first frequency domain resource corresponds to a default beam.

In a possible implementation, the method further includes: sending capability information to the first network device, where the capability information indicates information supported before the handover from the source cell to the target cell, and the information includes information about a quantity of TCI configurations of a neighboring cell and/or information about a quantity of TCI configurations that can be configured for each of a plurality of neighboring cells.

According to a second aspect, this application provides a frequency domain resource configuration method. The method may be performed by a first network device or a module in the first network device. The method includes: sending first configuration information to a terminal device, where the first configuration information is for configuring a first frequency domain resource set, and the first frequency domain resource set takes effect after the terminal device is handed over from a source cell to a target cell; and sending handover indication signaling to the terminal device, where the handover indication signaling indicates the handover from the source cell to the target cell.

It can be learned that the first configuration information is sent to the terminal device, so that after being handed over from the source cell to the target cell, the terminal device can quickly determine an activated frequency domain resource based on the first frequency domain resource set.

In a possible implementation, the first configuration information is further for configuring an identifier of the target cell associated with the first frequency domain resource set, so that the first frequency domain resource set takes effect after the terminal device is handed over from the source cell to the target cell.

In a possible implementation, the first configuration information is further for configuring a type identifier of the first frequency domain resource set, and the type identifier identifies that the first frequency domain resource set takes effect after the terminal device is handed over from the source cell to the target cell. The frequency domain resource set that takes effect after the handover to the target cell and a frequency domain resource set that takes effect in the source cell may be distinguished by using the type identifier.

In a possible implementation, the first frequency domain resource set is a subset of a second frequency domain resource set, or the first frequency domain resource set is a second frequency domain resource set, and the second frequency domain resource set takes effect in the source cell. After being handed over from the source cell to the target cell, the terminal device may support all or some frequency domain resource configurations in the source cell, to reduce a probability that a throughput decreases.

In a possible implementation, a network device further sends TCI indication signaling to the terminal device, where the TCI indication signaling is associated with the first frequency domain resource set, the TCI indication signaling indicates a TCI state, and the TCI state is associated with the target cell.

In a possible implementation, the handover indication signaling is RRC signaling, and the TCI indication signaling is a first MAC-CE or first DCI. That is, the RRC signaling indicates the cell handover, and the TCI indication signaling indicates the TCI state.

In a possible implementation, the TCI indication signaling is a second MAC-CE or second DCI, and the handover indication signaling is a third MAC-CE or third DCI; and the second MAC-CE is different from the third MAC-CE, and the second DCI is different from the third DCI. The TCI indication signaling and the handover indication signaling are carried in different MAC-CEs or different DCI. The TCI indication signaling indicates the TCI state, and the handover indication signaling indicates the cell handover. This helps improve flexibility.

In a possible implementation, the handover indication signaling includes TCI indication signaling, the TCI indication signaling is associated with the first frequency domain resource set, the TCI indication signaling indicates a TCI state, and the TCI state is associated with the target cell; and the handover indication signaling is a fourth MAC-CE or fourth DCI. In this manner, the handover indication signaling indicates both the cell handover and the TCI state, so that signaling overheads can be reduced.

In a possible implementation, the handover indication signaling further indicates that a frequency domain resource in the first frequency domain resource set is activated or deactivated, so that the terminal device determines the activated frequency domain resource.

In a possible implementation, the handover indication signaling includes a cell handover identifier, and the cell handover identifier indicates the cell handover, or indicates the handover to the target cell, to trigger the terminal device to be handed over from the source cell to the target cell.

In a possible implementation, before the first configuration information is sent to the terminal device, a configuration request is further sent to a second network device (namely, a network device corresponding to the target cell), where the configuration request includes second configuration information, and the second configuration information is for configuring the second frequency domain resource set; and a configuration response from the second network device is received, where the configuration response includes third configuration information, and the third configuration information is for configuring the first configuration information. The first network device negotiates with the second network device to determine the first configuration information, that is, determine the first frequency domain resource set.

In a possible implementation, the third configuration information includes the first configuration information. To be specific, the second network device directly notifies the first configuration information, and the first network device may directly forward the first configuration information to the terminal device.

In a possible implementation, the third configuration information includes some or all configuration information of the first configuration information, and a correspondence between a first frequency domain resource in the first frequency domain resource set and a second frequency domain resource in the second frequency domain resource set. To be specific, the second network device notifies the first network device of an association relationship between the first configuration information and the second configuration information and different configuration information, so that the first network device determines the first configuration information.

In a possible implementation, the third configuration information includes a correspondence between a first frequency domain resource in the first frequency domain resource set and a second frequency domain resource in the second frequency domain resource set, and unified update indication information, where the unified update indication information indicates whether the first frequency domain resource set is updated in a unified manner. To be specific, the second network device notifies the first network device of an association relationship between the first configuration information and the second configuration information, so that the first network device determines the first configuration information.

In a possible implementation, the second configuration information is further for configuring a reference frequency domain resource in the second frequency domain resource set.

According to a third aspect, this application provides a frequency domain resource configuration method. The method may be performed by a terminal device or a module in the terminal device. The method includes: receiving first configuration information from a first network device, where the first configuration information is for configuring a first frequency domain resource set, the first frequency domain resource set is a frequency domain resource set to which TCI indication signaling is applied, the first frequency domain resource set takes effect after a terminal device is handed over from a source cell to a target cell, the TCI indication signaling indicates a TCI state, and the TCI state is associated with the target cell; receiving handover indication signaling from the first network device, where the handover indication signaling indicates the handover from the source cell to the target cell; and determining an activated frequency domain resource based on the first frequency domain resource set.

In a possible implementation, before the handover indication signaling is received, the TCI indication signaling is further received. In this manner, the handover indication signaling is RRC signaling, and the TCI indication signaling is a first MAC-CE or first DCI. That is, the RRC signaling indicates the cell handover, and the TCI indication signaling indicates the TCI state.

In a possible implementation, the TCI indication signaling is a second MAC-CE or second DCI, and the handover indication signaling is a third MAC-CE or third DCI; and the second MAC-CE is different from the third MAC-CE, and the second DCI is different from the third DCI. The TCI indication signaling and the handover indication signaling are carried in different MAC-CEs or different DCI. The TCI indication signaling indicates the TCI state, and the handover indication signaling indicates the cell handover. This helps improve flexibility.

In a possible implementation, the handover indication signaling includes TCI indication signaling, and the handover indication signaling is a fourth MAC-CE or fourth DCI. In this manner, the handover indication signaling indicates both the cell handover and the TCI state, so that signaling overheads can be reduced.

According to a fourth aspect, this application provides a frequency domain resource configuration method. The method may be performed by a first network device or a module in the first network device. The method includes: sending first configuration information to a terminal device, where the first configuration information is for configuring a first frequency domain resource set, the first frequency domain resource set is a frequency domain resource set to which TCI indication signaling is applied, the TCI indication signaling indicates a TCI state, the TCI state is associated with a target cell, and the first frequency domain resource set takes effect after the terminal device is handed over from a source cell to a target cell; and sending handover indication signaling to the terminal device, where the handover indication signaling indicates the handover from the source cell to the target cell.

According to a fifth aspect, this application provides a frequency domain resource configuration method. The method may be performed by a terminal device or a module in the terminal device. The method includes: receiving first configuration information from a first network device (namely, a network device corresponding to a source cell), where the first configuration information is for configuring a first frequency domain resource set, and the first frequency domain resource set takes effect after the terminal device is handed over from the source cell to a target cell; and receiving handover indication signaling from the first network device, where the handover indication signaling indicates the handover from the source cell to the target cell.

In a possible implementation, the first configuration information includes a TCI state list of the first frequency domain resource set.

The TCI state list includes an uplink TCI state, indicating that a TCI mode of the first frequency domain resource set is a separate mode.

The TCI state list includes a downlink TCI state and/or an uplink and downlink joint TCI state, indicating that a TCI mode of the first frequency domain resource set is the separate mode.

In a possible implementation, the first configuration information includes a TCI mode of the first frequency domain resource set.

In a possible implementation, the first configuration information is configuration information of the source cell. In other words, the configuration information of the source cell may explicitly indicate the TCI mode of the first frequency domain resource set.

In a possible implementation, the first configuration information acts on a first reference frequency domain resource in the first frequency domain resource set, and TCI modes of all first frequency domain resources in the first frequency domain resource set are the same as a TCI mode of the first reference frequency domain resource.

In a possible implementation, the handover indication signaling includes TCI indication information, and the TCI indication information indicates a plurality of TCI states.

In a possible implementation, the TCI indication information further indicates, in the plurality of TCI states, a TCI state corresponding to a primary cell in the first frequency domain resource set.

In a possible implementation, the method further includes: The TCI indication information further indicates that a TCI state of a first frequency domain resource in the first frequency domain resource set does not exist, and the first frequency domain resource is not activated, where the first frequency domain resource corresponds to a default beam; or the first frequency domain resource is activated, where the first frequency domain resource corresponds to a default beam.

In a possible implementation, the method further includes:
sending capability information to the first network device, where the capability information indicates information supported before the handover from the source cell to the target cell, and the information includes information about a quantity of TCI configurations of a neighboring cell and/or information about a quantity of TCI configurations that can be configured for each of a plurality of neighboring cells.

In a possible implementation, the method further includes:
determining an activated frequency domain resource based on the first frequency domain resource set.

According to a sixth aspect, this application provides a frequency domain resource configuration method. The method may be performed by a first network device or a module in the first network device. The method includes: sending first configuration information to a terminal device, where the first configuration information is for configuring a first frequency domain resource set, and the first frequency domain resource set takes effect after the terminal device is handed over from a source cell to a target cell; and sending handover indication signaling to the terminal device, where the handover indication signaling indicates the handover from the source cell to the target cell.

In a possible implementation, the first configuration information includes a TCI state list of the first frequency domain resource set.

The TCI state list includes an uplink TCI state, indicating that a TCI mode of the first frequency domain resource set is a separate mode.

The TCI state list includes a downlink TCI state and/or an uplink and downlink joint TCI state, indicating that a TCI mode of the first frequency domain resource set is the separate mode.

In a possible implementation, the first configuration information includes the TCI mode of the first frequency domain resource set.

In a possible implementation, the first configuration information is configuration information of the source cell.

In a possible implementation, the first configuration information acts on a first reference frequency domain resource in the first frequency domain resource set, and TCI modes of all first frequency domain resources in the first frequency domain resource set are the same as a TCI mode of the first reference frequency domain resource.

In a possible implementation, the handover indication signaling includes TCI indication information, and the TCI indication information indicates a plurality of TCI states.

In a possible implementation, the TCI indication information further indicates, in the plurality of TCI states, a TCI state corresponding to a primary cell in the first frequency domain resource set.

In a possible implementation, the method further includes: receiving capability information from the terminal device, where the capability information indicates information supported before the handover from the source cell to the target cell, and the information includes information about a quantity of TCI configurations of a neighboring cell and/or information about a quantity of TCI configurations that can be configured for each of a plurality of neighboring cells.

According to a seventh aspect, this application provides a communication apparatus. The communication apparatus may be a terminal device, or may be an apparatus in the terminal device, or may be an apparatus that can be used in combination with the terminal device. The communication apparatus may alternatively be a chip system. The communication apparatus may perform the method according to the first aspect, the third aspect, or the fifth aspect. A function of the communication apparatus may be implemented by hardware, or may be implemented by executing corresponding software by hardware. The hardware or the software includes one or more units or modules corresponding to the foregoing function. The unit or the module may be software and/or hardware. For operations performed by the communication apparatus and beneficial effects, refer to the method and beneficial effects in the first aspect, the third aspect, or the fifth aspect.

According to an eighth aspect, this application provides a communication apparatus. The communication apparatus may be a first network device, or may be an apparatus in the first network device, or may be an apparatus that can be used in combination with the first network device. The communication apparatus may alternatively be a chip system. The communication apparatus may perform the method according to the second aspect, the fourth aspect, or the sixth aspect. A function of the communication apparatus may be implemented by hardware, or may be implemented by executing corresponding software by hardware. The hardware or the software includes one or more units or modules corresponding to the foregoing function. The unit or the module may be software and/or hardware. For operations performed by the communication apparatus and beneficial effects, refer to the method and beneficial effects in the second aspect, the fourth aspect, or the sixth aspect.

According to a ninth aspect, this application provides a communication apparatus. The communication apparatus includes a processor, and the processor is configured to perform the method according to any one of the first aspect to the sixth aspect.

According to a tenth aspect, this application provides a communication apparatus. The communication apparatus includes a processor and a memory. A storage medium stores instructions. When the instructions are executed by the processor, the communication apparatus is enabled to perform the method according to any one of the first aspect to the sixth aspect.

According to an eleventh aspect, this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement, by using a logic circuit or executing code instructions, the method according to any one of the first aspect to the sixth aspect.

According to a twelfth aspect, this application provides a computer-readable storage medium, where the storage medium stores instructions, and when a computer program or the instructions are executed by a communication apparatus, the method according to any one of the first aspect to the fourth aspect is implemented.

According to a thirteenth aspect, this application provides a computer program product including instructions. When a communication apparatus reads and executes the instructions, the communication apparatus is enabled to perform the method according to any one of the first aspect to the sixth aspect.

According to a fourteenth aspect, this application provides a communication system, including at least one communication apparatus configured to perform the method according to the first aspect and at least one communication apparatus configured to perform the method according to the second aspect, or including at least one communication apparatus configured to perform the method according to the third aspect, and at least one communication apparatus configured to perform the method according to the fourth aspect, or including at least one communication apparatus configured to perform the method according to the fifth aspect, and at least one communication apparatus configured to perform the method according to the sixth aspect.

### BRIEF DESCRIPTION OF DRAWINGS

FIG. 1 is a diagram of a system architecture to which this application is applied;
FIG. 2 is an example diagram of cross-cell management;
FIG. 3 is a schematic flowchart of a frequency domain resource configuration method according to this application;
FIG. 4 is an example diagram of activated CCs after a handover according to this application;
FIG. 5 is another example diagram of activated CCs after a handover according to this application;
FIG. 6 is a schematic flowchart of another frequency domain resource configuration method according to this application;
FIG. 7 is a configuration diagram of a correspondence between configuration information of a first frequency domain resource and configuration information of a second frequency domain resource according to this application;
FIG. 8 is a diagram of a form of communication between a terminal device and a network device;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

In this application, terms such as "first" and "second" are used for distinguishing between same items or similar items that have basically same functions and roles. A person skilled in the art may understand that the terms such as "first" and "second" do not limit a quantity or an execution sequence, and the terms such as "first" and "second" do not indicate a definite difference. The term "and/or" describes an association relationship for describing associated objects and represents that three relationships may exist. For example, A and/or B may represent the following three cases: Only A exists, both A and B exist, and only B exists. The character "/" usually indicates an "or" relationship between the associated objects.

It should be understood that in this application, "at least one" means one or more, and "a plurality of" means two or more. In addition, "equal to" in this application may be used together with "greater than", or may be used together with "less than." When "equal to" and "greater than" are used together, a technical solution of "greater than" is used. When "equal to" and "less than" are used together, a technical solution of "less than" is used.

First, a system architecture in this application is described.

This application may be applied to a 5th generation (5th generation, 5G) system, which may also be referred to as a new radio (new radio, NR) system; may be applied to a 6th generation (6th generation, 6G) system, a 7th generation (7th generation, 7G) system, or another future communication system; or may be further applied to a device-to-device (device-to-device, D2D) system, a machine-to-machine (machine-to-machine, M2M) system, a vehicle to everything (vehicle to everything, V2X) system, or the like.

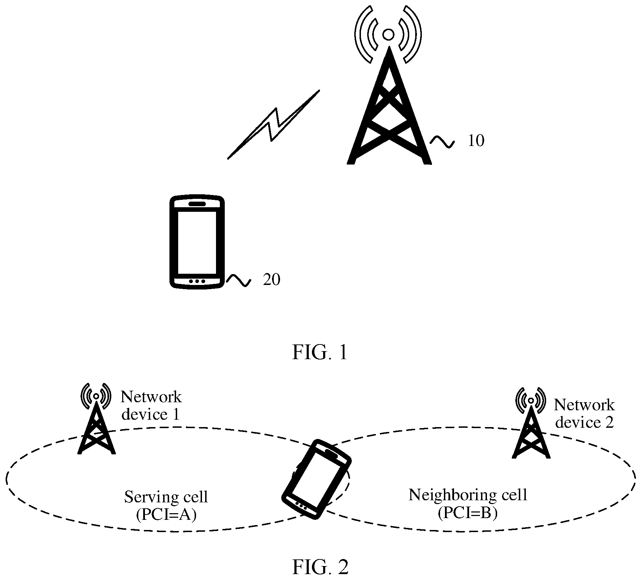

For example, this application may be applied to a system architecture shown in FIG. 1. The system architecture shown in FIG. 1 may include but is not limited to a network device 10 and a terminal device 20. Quantities and forms of devices in FIG. 1 are used as an example, and do not constitute limitations on embodiments of this application. For example, during actual application, a plurality of terminal devices and/or a plurality of network devices may be included.

The terminal device is also be referred to as user equipment (user equipment, UE), a mobile station (mobile station, MS), a mobile terminal (mobile terminal, MT), or the like, and is a device that provides a user with voice and/or data connectivity, for example, a handheld device or a vehicle-mounted device having a wireless connection function. Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. In this application, an apparatus configured to implement a function of the terminal device may be a terminal device, or may be an apparatus, for example, a chip system, that can support the terminal device in implementing the function. The apparatus may be installed in the terminal device, or may be used in combination with the terminal device. In this application, the chip system may include a chip, or may include a chip and another discrete component. In the technical solutions provided in this application, an example in which the apparatus configured to implement the function of the terminal device is UE is for describing the technical solutions provided in this application.

The network device, which may also be referred to as an access network device, is a radio access network (radio access network, RAN) node (or device) that enables the terminal device to access a wireless network, and may also be referred to as a base station. Currently, some examples of the RAN node are: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), a wireless fidelity (wireless fidelity, Wi-Fi) access point (access point, AP), or the like. In addition, in a network structure, the network device may include a central unit (central unit, CU) node, a distributed unit (distributed unit, DU) node, or a RAN device including the CU node and the DU node. It should be noted that, the central unit node and the distributed unit node may alternatively have other names. This is not limited in this application. In this application, an apparatus configured to implement a function of the network device may be a network device, or may be an apparatus, for example, a chip system, that can support the network device in implementing the function. The apparatus may be installed in the network device, or may be used in combination with the network device. In this application, the chip system may include a chip, or may include a chip and another discrete component. In the technical solutions provided in this application, an example in which the apparatus configured to implement the function of the network device is the network device is for describing the technical solutions provided in this application.

Next, related names or terms in this application are described, to facilitate understanding by a person skilled in the art.

### 1. Beam:

In a high-frequency communication system, to overcome a path loss, a network device and UE usually communicate with each other by using a directional high-gain antenna array (beam). The beam is a communication resource, and may be classified into a wide beam, a narrow beam, or a beam of another type. Different beams may be considered as different resources, and same information or different information may be sent by using different beams. Optionally, a plurality of beams that have a same communication feature or similar communication features may be considered as one beam.

Both the network device and the UE can generate a plurality of beams, and the network device and the UE select an appropriate beam for communication. For example, in downlink communication (that is, the network device performs sending and the UE performs receiving), the network device selects an appropriate transmitting beam, and the UE selects an appropriate receiving beam; and in uplink communication (that is, the UE performs sending and the network device performs receiving), the UE selects an appropriate transmitting beam, and the network device selects an appropriate receiving beam. The beam may be indicated in a protocol by using a transmission configuration indicator (transmission configuration indicator, TCI) state.

### 2. Quasi-co-location (quasi-co-location, QCL):

The QCL indicates that a plurality of resources have one or more same or similar communication features, and a same communication configuration or similar communication configurations may be used for a plurality of resources that have the QCL. For example, if two antenna ports have a QCL, a channel large-scale property for transmission that is of one symbol and that is performed by one antenna port may be inferred from a channel large-scale property for transmission that is of one symbol and that is performed by the other antenna port. The large-scale property may include a delay spread, an average delay, a Doppler spread, a Doppler shift, an average gain, a receiving parameter, a receiving beam number of the UE, a transmit/receive channel correlation, an angle of arrival for reception, a spatial correlation of a receiver antenna, a dominant angle of arrival (angle of arrival, AoA), an average angle of arrival, an AoA spread, and the like.

### 3. Transmission configuration indicator (transmission configuration indicator, TCI) state:

In a cellular network system, a beam used by UE to perform uplink sending or a beam used by the UE to perform downlink receiving may be indicated by a network device. For each physical channel or physical signal, the network device may perform beam indication for the UE by using different signaling, to direct the UE how to receive a physical downlink channel or a physical downlink signal, and direct the UE how to send an uplink physical channel or a physical uplink signal. The beam indication may be implemented by using the TCI state (state). In other words, the TCI state may indicate a receiving parameter of the physical downlink channel or the downlink signal, and the TCI state may indicate a sending parameter of the physical uplink channel or the uplink signal. The physical downlink channel may be, for example, a physical downlink control channel (physical downlink control channel, PDCCH) or a physical downlink shared channel (physical downlink shared channel, PDSCH), and the downlink signal may be, for example, a demodulation reference signal (demodulation reference signal, DMRS), a channel state information-reference signal (channel state information-reference signal, CSI-RS), or a synchronization signal block (synchronization signal block, SSB). The physical uplink channel may be, for example, a physical uplink control channel (physical uplink control channel, PUCCH) or a physical downlink shared channel (Physical uplink shared channel, PUSCH), and the uplink signal may be, for example, a sounding reference signal (sounding reference signal, SRS), a phase noise tracking signal (phase noise tracking reference signal, PTRS), or an uplink positioning signal (uplink positioning reference signal).

In an implementation, an example in which the physical downlink channel is the PDSCH is used. The network device may perform PDSCH beam indication by using a three-level signaling structure: RRC signaling+media access control-control element (media access control-control element, MAC-CE)+downlink control information (downlink control information, DCI). The network device uses the RRC signaling to configure the TCI state, further uses the MAC-CE to activate one or more TCI states, and further uses the DCI to indicate one of a plurality of activated TCI states. A TCI state indicated by the DCI is for current PDSCH transmission. For example, the network device may configure a maximum of 128 TCI states by using the RRC signaling, may further activate a maximum of eight TCI states by using MAC CE signaling (with evolution of a standard, a quantity of TCI states that can be activated may be greater than eight), and may further use a TCI field in the DCI to indicate that one TCI state is for current PDSCH transmission.

An example in which the downlink signal is a periodic CSI-RS is used. The network device configures a TCI state of the CSI-RS resource by using a qcl-InfoPeriodicCSI-RS field in the RRC signaling.

For example, the TCI state configured by using the RRC signaling may include a TCI state identifier (identifier, ID), a QCL type, and QCL information (QCL-Info) of the QCL type. QCL types may be classified as follows:
QCL typeA: The QCL typeA indicates a delay, a Doppler shift, a delay spread, and a Doppler spread. That is, the QCL typeA indicates time-frequency offset information.
QCL typeB: The QCL typeB indicates a Doppler shift and a Doppler spread.
QCL typeC: The QCL typeC indicates a delay and a Doppler shift.
QCL typeD: The QCL typeD indicates a beam.

It may be understood that, when the QCL type of the TCI state is the QCL typeA/QCL typeB/QCL typeC, it indicates that the TCI state indicates information such as the time-frequency offset information, does not include space domain information, and is usually for assisting the UE in data receiving and demodulation. When the QCL type of the TCI state is the QCL typeD, it indicates that the TCI state indicates the beam.

The QCL information may include a referenceSignal (referenceSignal) field, and a value of the referenceSignal field may be, for example, an SSB-index or a CSI-RS resource Id.

For example, when the value of the referenceSignal field in the TCI state is a non-zero power channel state information-reference signal resource identifier (NZP-CSI-RS-ResourceId), it indicates that the network device indicates the UE to receive a physical downlink channel by using a receiving parameter of a CSI-RS resource corresponding to the ID. For example, when a reference signal of a QCL typeA in a TCI state of the PDSCH includes an identifier of a CSI-RS resource 1 (for example, an index of the CSI-RS resource), the UE receives the PDSCH by using time-frequency offset information of the CSI-RS resource 1. For another example, when a reference signal of a QCL typeD in a TCI state of the PDSCH includes an identifier of a CSI-RS resource 1 (for example, an index of the CSI-RS resource), the UE receives the PDSCH by using a receiving beam of the CSI-RS resource 1.

It should be noted that, when the QCL type of the TCI state is the QCL typeD, the TCI state and the beam may be replaced with each other. A QCL type of the TCI state described below is the QCL typeD by default.

TCI modes may be classified into an uplink and downlink joint TCI mode (joint TCI) and a separate (separate) TCI mode. For ease of description, the uplink and downlink joint TCI mode may be referred to as a joint mode for short, and the separate TCI mode may be referred to as a separate mode for short. The separate mode indicates that a serving cell is configured with dl-OrJointTCI-StateList of a DL TCI state and ul-TCI-ToAddModList of the UL TCI state. The joint mode indicates that the serving cell is configured with dl-OrJointTCI-StateList, and is for a joint TCI state of an uplink and downlink operation.

In another implementation, in 3rd generation partnership project (3rd generation partnership project, 3GPP) Release17 (Release17, R17), the network device may use a unified TCI (unified TCI) state to indicate a transmission parameter (for example, a transmitting beam or a receiving beam) of the physical downlink channel and/or the physical uplink channel. The unified TCI state may further indicates transmission parameters of some reference signals, and the some reference signals are, for example, CSI-RSs and SRSs. The unified TCI state may also be described as a unified beam. With the evolution of the standard, the network device may further use another signaling architecture or signaling form to indicate the transmission parameter of the physical downlink channel and/or the physical uplink channel.

### 4. Frequency domain resource set:

In R17, a network device may configure a plurality of frequency domain resources of UE as one frequency domain resource set. The frequency domain resource set may also be described as a frequency domain resource group, a frequency domain resource list (list), or the like. For example, the network device may configure a plurality of carrier components (carrier components, CCs) (or referred to as component carriers (component carriers, CCs)) of the UE as a CC list. The CC may also be referred to as a serving cell (serving cell) in a protocol. When a plurality of CCs are configured for the UE, the plurality of CCs may include at least one primary cell (primary cell, PCell) and at least one secondary cell (secondary cell, SCell). For another example, the network device may configure a plurality of bandwidth parts (bandwidth parts, BWPs) of the UE as one BWP list. The frequency domain resource set includes a reference frequency domain resource. For example, a CC in the plurality of CCs is a reference frequency domain resource, or a BWP of a CC in the plurality of CCs is a reference frequency domain resource.

When the reference frequency domain resource is indicated to perform beam update, beam update is performed on all frequency domain resources in the frequency domain resource set in which the reference frequency domain resource is located along with the reference frequency domain resource. For example, a CC list1 includes a CC#1 and a CC#2, and the CC#1 is a reference CC. When the CC#1 is indicated to perform beam update, the CC#2 performs beam update following the CC#1. In other words, when the UE is indicated on the CC#1 to perform uplink and downlink transmission based on a TCI state 1, the CC#2 correspondingly performs beam update, that is, performs uplink and downlink transmission by using the TCI state #1. A serving cell ID of a reference signal included in QCL information in the TCI state may not be configured (configured by default). In this case, the UE determines the serving cell identifier (serving cell ID) of the reference signal based on an ID of a target CC. For example, in this example, no serving cell ID is configured for a source referencesignal (source referencesignal, source RS) of a QCL typeA in the TCI state #1. When the TCI state #1 is for the CC#2 in the CC list, the source RS of the QCL typeA determines the serving cell ID based on the CC#2. A beam update procedure of a plurality of frequency domain resources can be simplified by using the reference frequency domain resource, so that signaling overheads are reduced.

A beam update indication may be understood as a TCI state update indication. Further, the frequency domain resource set may also be understood as a CC group for unified beam update, a CC group for unified TCI state update, a CC group for unified management, or the like. The frequency domain resource set may also be understood as a multi-carrier common TCI update set (common TCI update CC list), a multi-carrier common beam update set, a multi-carrier common TCI state update set, a multi-carrier common TCI effective set, or the like.

### 5. Cross-cell beam management:

The cross-cell beam management refers to cross-cell beam management based on a layer 1 (layer 1, L1)/layer 2 (layer 2, L2), and indicates, based on a MAC-CE or DCI, UE to measure and report a measurement result of an SSB. A physical cell identifier (physical cell ID, PCI) associated with the SSB is different from a PCI of a current serving cell. In addition, when a network device indicates the UE to activate one or more TCI states, the SSB is used as a reference source for a reference signal of a QCL typeD in a TCI state. That is, the UE may use a beam corresponding to the SSB. The PCI associated with the SSB is different from the PCI of the current serving cell. For example, the current serving cell may be represented as PCI=A, and the PCI associated with the SSB may be represented as PCI=B, where a cell identified by PCI=B may be a neighboring cell of the serving cell or another cell.

For example, refer to an example diagram of cross-cell management shown in FIG. 2. In FIG. 2, when UE moves from a serving cell (for example, PCI=A) to an edge of the serving cell and a neighboring cell (for example, PCI=B), a network device 1 corresponding to the serving cell may coordinate with a network device 2 corresponding to the neighboring cell, and send data to the UE based on a beam of the network device 2. The network device 1 corresponding to the serving cell may be understood as that a cell coverage area of the network device 1 includes the serving cell. The network device 2 corresponding to the neighboring cell may be understood as that a cell coverage area of the network device 2 includes the neighboring cell. It may be understood that the network device 1 sends the data to the UE based on the beam of the network device 2, and no cell handover occurs. To be specific, the UE is not handed over from being connected to the serving cell to being connected to the neighboring cell, but the network device 1 borrows the beam of the network device 2 to send the data to the UE. When the network device 1 indicates the UE to report a measurement result of an SSB 1, a PCI associated with the SSB 1 is B, and the network device 1 indicates one or more activated TCI states of the UE, the SSB 1 is used as a reference source for the reference signal of the QCL typeD in the TCI state, so that the UE may receive the data by using a beam of the neighboring cell.

Further, the cross-cell beam management may also be described as cross-cell beam switching, inter-cell beam switching, L1/L2-based cross-cell beam switching, L1/L2-based cross-cell management, or the like.

### 6. Cell handover:

In an implementation, a network device may send, to UE, RRC signaling that carries a handover command, to trigger the UE to be handed over from one cell to another cell, for example, handed over from a source cell to a target cell. The RRC signaling carrying the handover command may be referred to as synchronization reconfiguration (Reconfiguration WithSync) RRC signaling in a protocol. In addition to carrying the handover command, the RRC signaling further carries frequency domain resource configuration information of a target cell. For example, CC configuration information is for configuring a CC of the target cell and indicates whether the CC of the target cell is activated after a handover to the target cell. For example, the RRC signaling includes an indication field. When the indication field indicates "activated", it indicates that an initial state of the CC of the target cell after the handover to the target cell is an activated state. That is, the CC of the target cell is activated after the handover. When the indication field indicates "deactivated", it indicates that an initial state of the CC of the target cell after the handover to the target cell is a deactivated state. That is, the CC of the target cell is deactivated after the handover. Further, the RRC signaling further carries a dedicated (non-contention-based) random access resource and an identifier of the UE in the target cell, for example, a radio network temporary identifier (radio network temporary identifier, RNTI).

The cell handover triggered by using the RRC signaling may be understood as a layer 3 (layer 3, L3)-based cell handover or a higher layer signaling-based cell handover.

In another implementation, the network device may trigger, by using L1/L2 signaling, the UE to be handed over from one cell to another cell. For example, DCI carries a handover command, and the handover command indicates that the UE is handed over from the source cell to the target cell.

The cell handover triggered by using the L1/L2 signaling may be understood as an L1/L2-based cell handover.

For the L3-based cell handover, a delay from a moment at which the UE receives the RRC signaling to a moment at which a frequency domain resource of the target cell is activated is large. For the L1/L2-based cell handover, the L1/L2 signaling does not indicate which frequency domain resource or frequency domain resources are to be activated. Therefore, after being handed over from the source cell to the target cell, the UE does not know which frequency domain resource or frequency domain resources are to be used for communication. In view of the foregoing disadvantages, this application provides a frequency domain resource configuration method and an apparatus, to quickly determine the activated frequency domain resource.

This application may be applied to a scenario in which UE is handed over from a source cell to a target cell. The source cell is a current serving cell of the UE, and the target cell is a cell to which the UE is to be handed over, for example, a neighboring cell. The source cell and the target cell may be different cells served by a same network device, or the source cell and the target cell may be cells served by different network devices. For example, the source cell is a cell served by a first network device, and the target cell is a cell served by a second network device. In this application, an example in which the source cell is the cell served by the first network device and the target cell is the cell served by the second network device is used.

The following describes the frequency domain resource configuration method provided in this application.

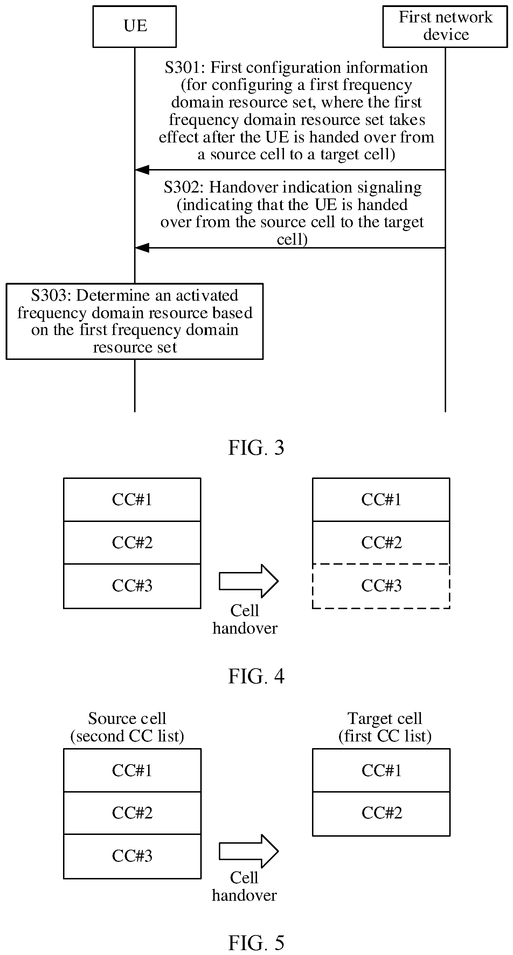

FIG. 3 is a schematic flowchart of a frequency domain resource configuration method according to this application. The procedure specifically includes the following steps.

S301: A first network device sends first configuration information to UE. Correspondingly, the UE receives the first configuration information from the first network device. The first configuration information is for configuring a first frequency domain resource set, and the first frequency domain resource set takes effect after the UE is handed over from a source cell to a target cell.

That the first configuration information is for configuring a first frequency domain resource set may also be described as that the first configuration information includes the first frequency domain resource set. That the first frequency domain resource set takes effect after the UE is handed over from a source cell to a target cell may be understood as that the UE may enable or use the first frequency domain resource set after being handed over from the source cell to the target cell. For example, the UE may determine, based on the first frequency domain resource set, to activate specific frequency domain resources in the target cell. That the first frequency domain resource set takes effect after the UE is handed over from a source cell to a target cell may also be described as that the first frequency domain resource set takes effect when the UE is handed over from the source cell to the target cell, or the first frequency domain resource set takes effect when the UE is handed over to a target cell group, or the first frequency domain resource set takes effect after the UE is handed over to a target cell group. For example, the first frequency domain resource set is a first CC list. The first CC list takes effect after the UE is handed over from the source cell to the target cell.

After the UE is handed over from the source cell to the target cell, an identifier of a frequency domain resource in the first frequency domain resource set may be an identifier of a secondary cell when the target cell serves as a primary cell; and before the UE is handed over from the source cell to the target cell, the identifier of the frequency domain resource in the first frequency domain resource set may be an identifier of a secondary cell when the source cell serves as a primary cell.

Optionally, the first frequency domain resource set is associated with TCI indication signaling. That the first frequency domain resource set is associated with TCI indication signaling may also be described as that the TCI indication signaling is associated with the first frequency domain resource set, or the TCI indication signaling acts on the first frequency domain resource set, or the TCI indication signaling has an association relationship with the first frequency domain resource set, or the first frequency domain resource set associated with the TCI indication signaling, or the like. That the first frequency domain resource set is associated with TCI indication signaling may be understood as that a TCI state indicated by the TCI indication signaling may be used for the first frequency domain resource set, or a beam of the first frequency domain resource set may be switched to a beam corresponding to the TCI indication signaling, or the like. The first frequency domain resource set may be a frequency domain resource set to which the TCI indication signaling is applied. To be specific, an object to which the TCI indication signaling can be applied, or for which the TCI indication signaling can be used, or on which the TCI indication signaling can act, or on which the TCI indication signaling can take effect is the first frequency domain resource set.

The TCI indication signaling indicates the TCI state, the TCI state may be specifically identified by using a TCI state ID, and the TCI state is associated with the target cell. In other words, a reference signal of a QCL typeD in the TCI state is associated with the target cell. In an implementation, the reference signal of the QCL typeD in the TCI state is an SSB, and a cell index (cell index) associated with the SSB is associated with an identifier of the target cell. In another implementation, the reference signal of the QCL typeD in the TCI state is a CSI-RS, the CSI-RS is associated with an SSB, and a cell index of the SSB is associated with an identifier of the target cell or a serving cell index (serving cell index) of a target CC indicated by a TCI state implicitly associated with the CSI-RS. The identifier of the target cell identifies the target cell, and may be a PCI, a virtual cell identifier or a logical cell identifier associated with the PCI, or the like. The TCI indication signaling may be a MAC-CE or may be carried in a MAC-CE. The MAC-CE indicates that the TCI state is activated, and the TCI state is associated with the target cell. Alternatively, the TCI indication signaling may be DCI or may be carried in DCI. The DCI indicates the TCI state, and the TCI state is associated with the target cell. The TCI state may also be described as an identifier of a reference signal, for example, an SSB ID.

In an implementation, the TCI indication signaling may indicate a cell handover, for example, indicate that the UE is handed over from the source cell to the target cell. In another implementation, the TCI indication signaling is included in handover indication signaling, the handover indication signaling indicates a cell handover, and the TCI indication signaling indicates a switch to a beam of the target cell, for example, indicates that the UE switches, to beams of the target cell, beams of some or all first frequency domain resources in the first frequency domain resource set. If the TCI indication signaling acts on a first reference frequency domain resource in the first frequency domain resource set (for ease of description, a reference frequency domain resource in the first frequency domain resource set is referred to as the first reference frequency domain resource), beams of all the first frequency domain resources in the first frequency domain resource set are switched to the beams of the target cell. If the TCI indication signaling acts on a first frequency domain resource other than the first reference frequency domain resource in the first frequency domain resource activation, a beam of the first frequency domain resource is switched to the beam of the target cell. That the TCI indication signaling acts on a frequency domain resource may be understood as that the TCI indication signaling is for the frequency domain resource, or TCI indication signaling is received on the frequency domain resource, or the frequency domain resource is indicated by the TCI indication signaling, or the like. The TCI indication signaling may also be described as TCI indication information. The TCI indication information may be included in the handover indication signaling. In other words, the handover indication signaling includes the TCI indication information.

Optionally, the first configuration information is further for configuring the identifier of the target cell associated with the first frequency domain resource set. The first frequency domain resource set is associated with the identifier of the target cell. In this case, the first frequency domain resource set takes effect after the UE is handed over from the source cell to the target cell. One frequency domain resource set may be associated with an identifier of one or more target cells. That the first configuration information is for configuring the identifier of the target cell associated with the first frequency domain resource set may be understood as that the first configuration information is for configuring a type identifier (flag) of the first frequency domain resource set, and the type identifier identifies that the first frequency domain resource set takes effect after the UE is handed over from the source cell to the target cell. In an implementation, a plurality of frequency domain resource sets are configured for the UE, and different types of frequency domain resource sets have different type identifiers. For example, that a frequency domain resource set 1 has a flag 1 indicates that the frequency domain resource set 1 takes effect after the UE is handed over from the source cell to the target cell; and that a frequency domain resource set 2 has a flag 2 indicates that the frequency domain resource set 2 takes effect in the source cell. For another example, that a reference frequency domain resource in the frequency domain resource set 1 has the flag 1 indicates that the frequency domain resource set 1 takes effect after the UE is handed over from the source cell to the target cell; and that a reference frequency domain resource in the frequency domain resource set 2 has the flag 2 indicates that the frequency domain resource set 2 takes effect in the source cell. In another implementation, a frequency domain resource set that takes effect after the UE is handed over from the source cell to the target cell has a flag, and a frequency domain resource set that takes effect in the source cell does not have a flag. In this case, that a frequency domain resource set has a flag indicates that the frequency domain resource set takes effect after the UE is handed over from the source cell to the target cell. On the contrary, that a frequency domain resource set does not have a flag indicates that the frequency domain resource set takes effect in the source cell. For example, that a reference frequency domain resource in a frequency domain resource set has a flag indicates that the frequency domain resource set takes effect after the UE is handed over from the source cell to the target cell. On the contrary, that a reference frequency domain resource in a frequency domain resource set does not have a flag indicates that the frequency domain resource set takes effect in the source cell.

Optionally, the first configuration information is further for configuring the first reference frequency domain resource in the first frequency domain resource set, to learn whether the TCI indication signaling acts on the first reference frequency domain resource.

Optionally, the first configuration information further includes configuration information of each first frequency domain resource in the first frequency domain resource set, for example, configuration information of each first CC. The configuration information of each first CC may include one or more of the following: the PCI, uplink resource configuration information, downlink resource configuration information, frame structure configuration information (tdd-UL-DL-Configuration), reference signal configuration information, synchronization signal configuration information, or the like. Alternatively, it is described as that the first configuration information is further for configuring information about each first frequency domain resource in the first frequency domain resource, and the information may include one or more of the following: the PCI or the logical cell identifier associated with the PCI, an uplink resource, a downlink resource, a frame structure, a reference signal, a synchronization signal, or the like.

The first configuration information may be carried in RRC signaling. The first configuration information may be configured in advance or preconfigured by the first network device. For example, before the UE is handed over from the source cell to the target cell, the first network device determines the first configuration information and sends the first configuration information to the UE.

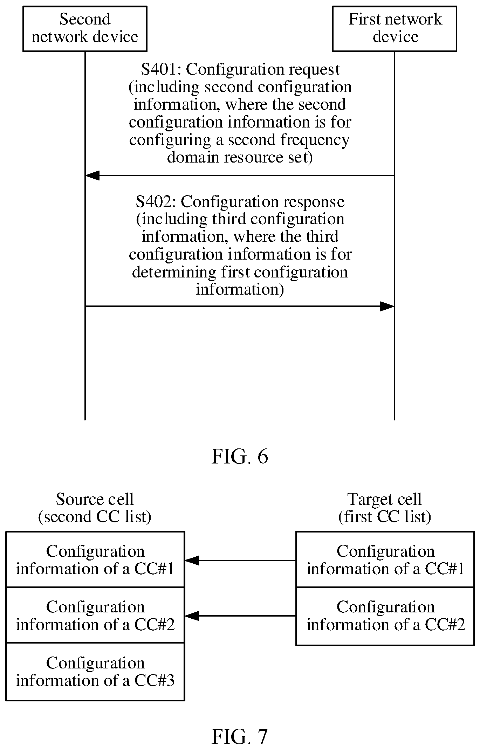

In an implementation, the source cell is a cell served by the first network device, the target cell is a cell served by the second network device, and the first network device is different from the second network device. Further, the first network device may negotiate with the second network device to determine the first configuration information. For a specific negotiation process, refer to an embodiment shown in FIG. 6.

In another implementation, the source cell and the target cell are different cells served by the first network device, and then the first network device determines the first configuration information. For example, the first network device determines, based on configuration information of a frequency domain resource set that takes effect in the source cell, configuration information of the first frequency domain resource set that takes effect after the UE is handed over from the source cell to the target cell, that is, determines the first configuration information. For another example, the first network device adjusts configuration information of a frequency domain resource set that takes effect in the source cell, to obtain the first configuration information. The adjustment may be performed based on, for example, CSI of the source cell and CSI of the target cell. For ease of description, in this application, the frequency domain resource set that takes effect in the source cell is referred to as a second frequency domain resource set.

Optionally, the first frequency domain resource set may be the same as the second frequency domain resource set. In other words, the first frequency domain resource set and the second frequency domain resource set are a same frequency domain resource set. It may be understood that, after being handed over from the source cell to the target cell, the UE may support all frequency domain resource configurations in the source cell.

Optionally, the first frequency domain resource set is a subset of the second frequency domain resource set. In other words, the second frequency domain resource set includes all the first frequency domain resources in the first frequency domain resource set. It may be understood that, after being handed over from the source cell to the target cell, the UE may support all or some frequency domain resource configurations in the source cell.

Optionally, the first frequency domain resource set may be different from the second frequency domain resource set.

S302: The first network device sends the handover indication signaling to the UE. Correspondingly, the UE receives the handover indication signaling from the first network device. The handover indication signaling indicates that the UE is handed over from the source cell to the target cell.

The handover indication signaling may be RRC signaling, or the handover indication signaling is carried in the RRC signaling. Alternatively, the handover indication signaling may be a MAC-CE or DCI, or the handover indication signaling is carried in the MAC-CE or DCI.

The following provides descriptions in different cases based on types of the handover indication signaling and types of the TCI indication signaling.

Case 1: The TCI indication signaling is a first MAC-CE or first DCI, or the TCI indication signaling is carried in the first MAC-CE or first DCI; and the handover indication signaling is RRC signaling.

Optionally, before sending the RRC signaling to the UE, the first network device further sends the first MAC-CE or first DCI to the UE. The first MAC-CE or first DCI indicates the TCI state. When receiving the first MAC-CE or first DCI, the UE performs communication on an activated second frequency domain resource by using the TCI state, for example, receives a PDSCH by using a receiving parameter of a reference signal associated with the TCI state. The activated second frequency domain resource may be all second frequency domain resources in the second frequency domain resource set or a specific second frequency domain resource, and this depends on whether the TCI indication signaling acts on a second reference frequency domain resource.

For Case 1, the first network device explicitly indicates, by using the RRC signaling, the UE to be handed over from the source cell to the target cell, and may further indicate the UE to use or enable the first frequency domain resource set after the UE is handed over to the target cell. The RRC signaling that carries the handover indication signaling and the RRC signaling that carries the first configuration information are different RRC signaling.

Case 2: The TCI indication signaling is a second MAC-CE or second DCI, and the handover indication signaling is a third MAC-CE or third DCI; and the second MAC-CE is different from the third MAC-CE, and the second DCI is different from the third DCI.

Optionally, the first network device further sends the TCI indication signaling to the UE, in other words, sends the second MAC-CE or second DCI, where the second MAC-CE or second DCI indicates the TCI state. The first network device may first send the TCI indication signaling, and then send the handover indication signaling. A sequence of sending the TCI indication signaling and the handover indication signaling is not limited in this application.

It may be understood that the second MAC-CE or second DCI indicates the TCI state, and the third MAC-CE or third DCI indicates that the UE is handed over from the source cell to the target cell. In Case 2, the TCI indication signaling indicates the TCI state (that is, indicates the beam). For the UE, it may be understood as that the beam is switched to the beam of the target cell, and a preconfigured target cell configuration is not used. That is, the TCI indication signaling does not act on the first frequency domain resource set. However, when the handover indication signaling is received, the beam does not need to be changed, and a preconfigured target cell configuration is directly used. That is, the TCI indication signaling acts on the first frequency domain resource set.

For the third MAC-CE, the third MAC-CE includes the identifier of the target cell and an activation indication field. For the third MAC-CE, refer to the following fourth MAC-CE. A difference lies in that the third MAC-CE does not indicate the TCI state.

For the third DCI, the third DCI includes the identifier of the target cell and an activation indication field. For the third DCI, refer to the following fourth DCI. A difference lies in that the third DCI does not indicate the TCI state.

Case 3: The handover indication signaling includes the TCI indication signaling, in other words, the TCI indication signaling is carried in the handover indication signaling; and the handover indication signaling is a fourth MAC-CE or fourth DCI, or the handover indication signaling is carried in the fourth MAC-CE or fourth DCI.

It may be understood that the handover indication signaling not only indicates the TCI state, but also indicates that the UE is handed over from the source cell to the target cell.

For the fourth MAC-CE, the fourth MAC-CE includes the identifier of the target cell and an activation indication field. The identifier of the target cell may be the PCI, the virtual cell identifier, the logical cell identifier, or the like. The identifier of the target cell may be explicitly indicated or implicitly indicated in the fourth MAC-CE. The activation indication field indicates that the frequency domain resource in the first frequency domain resource set is activated or deactivated after the handover to the target cell. For example, refer to a fourth MAC-CE format shown in the following Table 1.

**Table 1**

| Field 1 | | | | | | | |
|---|---|---|---|---|---|---|---|
| Field 2 | | | | | | | |
| 1 | 1 | 1 | 1 | 0 | 0 | 0 | 0 |
| 0 | 0 | 0 | 0 | 0 | 0 | 0 | 0 |

In Table 1, the field 1 and the field 2 may indicate a cell handover and a beam switch. For example, the field 1 indicates the cell handover (for example, the field 1 may include a cell handover identifier), and the field 2 indicates the beam switch (for example, the field 2 may include the TCI state ID). Alternatively, the field 1 and the field 2 jointly indicate a cell handover and a beam switch. Alternatively, the field 1 and the field 2 may indicate other information, for example, a random access resource. The fourth MAC-CE is in a format of eight bits in each row, a quantity of bits occupied by the field 1 may be 8 or another value, and a quantity of bits occupied by the field 2 may be 8 or another value.

In an implementation, a quantity of bits occupied by the activation indication field is related to a quantity of frequency domain resources included in the first frequency domain resource set. If the quantity of frequency domain resources included in the first frequency domain resource set is less than or equal to 8, the activation indication field may occupy one row in the fourth MAC-CE format, and one bit in the row corresponds to one frequency domain resource (where a specific bit corresponding to which frequency domain resource is not limited in this application). For example, the 1^{st} bit in the row corresponds to the 1^{st} frequency domain resource. That a value of the 1^{st} bit is 1 indicates that the 1^{st} frequency domain resource is activated. That a value of the 1^{st} bit is 0 indicates that the 1^{st} frequency domain resource is deactivated (for example, the frequency domain resource may be released). For another example, that a value of the 1^{st} bit is 0 indicates that the 1^{st} frequency domain resource is activated. That a value of the 1^{st} bit is 1 indicates that the 1^{st} frequency domain resource is deactivated. If the quantity of frequency domain resources included in the first frequency domain resource set is greater than 8 and less than or equal to 16, the activation indication field may occupy two rows in the fourth MAC-CE format, and so on. The first frequency domain resource set may include a maximum of 32 frequency domain resources. In this case, the activation indication field occupies a maximum of four rows in the fourth MAC-CE format.

In another implementation, the activation indication field occupies one row in the fourth MAC-CE format, and one bit in the row indicates one frequency domain resource set (where a specific bit corresponding to which frequency domain resource set is not limited in this application). For example, the 1^{st} bit in the row indicates the first frequency domain resource set. That a value of the 1^{st} bit is 1 indicates that the first frequency domain resource set is activated, that is, all frequency domain resources in the first frequency domain resource set are activated. That a value of the 1^{st} bit is 0 indicates that the first frequency domain resource set is deactivated, that is, all frequency domain resources in the first frequency domain resource set are deactivated. For another example, that a value of the 1^{st} bit is 0 indicates that the first frequency domain resource set is activated. That a value of the 1^{st} bit is 1 indicates that the first frequency domain resource set is deactivated. Currently, the UE may support a maximum of four frequency domain resource sets, for example, support CC lists of four target cells (where one target cell corresponds to one CC list). In this case, the activation indication field occupies a maximum of four bits in the row, and another bit in the row may be set as a pad bit.

It should be noted that the foregoing two manners are used as examples, and do not constitute limitations on this application.

For the fourth DCI, the fourth DCI includes the identifier of the target cell and an activation indication field. The identifier of the target cell may be the PCI, the virtual cell identifier, the logical cell identifier, or the like. The identifier of the target cell may explicitly indicate or implicitly indicate the cell handover. The activation indication field indicates that the frequency domain resource in the first frequency domain resource set is activated or deactivated after the handover to the target cell. The activation indication field in the fourth DCI may be a newly added field, or may be a changed existing field, so that the activation indication field indicates activation or deactivation. For example, a special value combination of one or more existing fields indicates the activation or deactivation. For example, values of an existing field A are all 1, and values of an existing field B are all 0. It indicates that the 1^{st} frequency domain resource in the first frequency domain resource set is activated after the handover to the target cell. For another example, values of an existing field A are all 0, and values of an existing field B are all 1. It indicates that the 4^{th} frequency domain resource in the first frequency domain resource set is activated after the handover to the target cell.

Optionally, the fourth DCI further includes the cell handover identifier. The cell handover identifier indicates the cell handover, to indicate the cell handover. The cell handover identifier and the identifier of the target cell may be combined to indicate that the UE is handed over from the source cell to the target cell. Alternatively, the cell handover identifier indicates the handover to the target cell, to indicate that the UE is handed over from the source cell to the target cell. For example, a TCI state indicated by the fourth DCI is associated with the cell handover identifier.

It may be understood that, for Case 2 or Case 3, the handover indication signaling not only indicates the handover from the source cell to the target cell, but also indicates that the frequency domain resource in the first frequency domain resource set is activated or deactivated. That is, the handover indication signaling may include the activation indication field.

The foregoing three cases are used as examples, and do not constitute limitations on this application.

S303: The UE determines an activated frequency domain resource based on the first frequency domain resource set.

In a first implementation, the UE determines the activated frequency domain resource based on the first frequency domain resource set and the second frequency domain resource set. For example, the UE determines the activated frequency domain resource based on a correspondence between the first frequency domain resource in the first frequency domain resource set and the second frequency domain resource in the second frequency domain resource set. The correspondence between the first frequency domain resource and the second frequency domain resource may be specifically a correspondence between configuration information of the first frequency domain resource and configuration information of the second frequency domain resource. The activated frequency domain resource may be the second frequency domain resource in the second frequency domain resource set, or may be the first frequency domain resource in the first frequency domain resource set.

Example 1: The activated frequency domain resource is the second frequency domain resource in the second frequency domain resource set, and an example in which the frequency domain resource is a CC is used. Refer to an example diagram of activated CCs after a handover shown in FIG. 4. In FIG. 4, in the source cell, a second CC list includes a CC#1 to a CC#3, and the CC#1 to the CC#3 are activated CCs. The first configuration information does not include configuration information of a first CC corresponding to the CC#3 in the second CC list. In this case, after being handed over from the source cell to the target cell, the UE determines that the CC#1 and the CC#2 in the second CC list are activated CCs, and releases the CC#3. Determining that the CC#1 and the CC#2 in the second CC list are activated CCs may also be understood as adjusting activating the CC#1 to the CC#3 in the second CC list to activating the CC#1 and the CC#2 in the second CC list. Releasing the CC#3 may also be understood as adjusting the CC#3 from an activated state to a deactivated state.

Example 2: The activated frequency domain resource is the first frequency domain resource in the first frequency domain resource set, and an example in which the frequency domain resource is a CC is used. Refer to another example diagram of activated CCs after a handover shown in FIG. 5. In FIG. 5, in the source cell, a second CC list includes a CC#1 to a CC#3, and the CC#1 to the CC#3 are activated CCs; and in the target cell, a first CC list includes a CC#1 and a CC#2, and numbers of CCs in each cell start from 1 or start from 0. There is a correspondence between the CC#1 in the first CC list and the CC#1 in the second CC list, there is a correspondence between the CC#2 in the first CC list and a CC#2 in the second CC list, and the CC#3 in the second CC list does not have a corresponding CC in the first CC list. In this case, after being handed over from the source cell to the target cell, the UE may release the second CC list, and activate the CC#1 and the CC#2 in the first CC list.

Optionally, the UE performs communication on the activated frequency domain resource by using the TCI state indicated by the TCI indication signaling. For example, the UE receives, on the activated frequency domain resource, the PDSCH by using the receiving parameter of the reference signal associated with the TCI state.

The first implementation is applicable to Case 1, Case 2, or Case 3.

In a second implementation, the UE determines the activated frequency domain resource based on the first frequency domain resource set, where the activated frequency domain resource is the first frequency domain resource in the first frequency domain resource set.

Optionally, when the handover indication signaling indicates that the first frequency domain resource in the first frequency domain resource set is activated or deactivated, that is, when the handover indication signaling includes the activation indication field, after being handed over from the source cell to the target cell, the UE determines, from the first frequency domain resource set based on the activation indication field, a first frequency domain resource that is indicated to be activated, and activates the first frequency domain resource. This example is applicable to Case 2 or Case 3.

Optionally, the TCI indication signaling acts on the reference frequency domain resource in the first frequency domain resource set. In this case, after being handed over from the source cell to the target cell, the UE determines that all the first frequency domain resources in the first frequency domain resource set are activated frequency domain resources. Further, the UE performs communication on all the first frequency domain resources in the first frequency domain resource set by using the TCI state indicated by the TCI indication signaling.

Optionally, the TCI indication signaling acts on a target frequency domain resource in the first frequency domain resource set, and the target frequency domain resource is a non-reference frequency domain resource. In this case, after the handover from the source cell to the target cell, the target frequency domain resource is determined as the activated frequency domain resource, and a frequency domain resource other than the target frequency domain resource in the first frequency domain resource set is released. Further, the UE performs communication on the target frequency domain resource by using the TCI state indicated by the TCI indication signaling.

When the first frequency domain resource set is the subset of the second frequency domain resource set, the UE may further release a second frequency domain resource other than the first frequency domain resource set in the second frequency domain resource set.

The first implementation and the second implementation are applicable to a case in which the first network device sends the first configuration information to the UE. If the first network device does not send the first configuration information to the UE in advance, in a third implementation, the UE determines the activated frequency domain resource based on the second frequency domain resource set. For example, after the UE is handed over from the source cell to the target cell, all frequency domain resources in the second frequency domain resource set are activated by default. Further, the UE performs communication on all the second frequency domain resources in the second frequency domain resource set by using the TCI state indicated by the TCI indication signaling.

In the embodiment shown in FIG. 3, after being handed over from the source cell to the target cell, the UE can quickly determine the activated frequency domain resource based on the first frequency domain resource set, so that the UE can perform communication based on the activated frequency domain resource. In addition, the UE obtains the first frequency domain resource set that takes effect in the target cell, so that a probability that a throughput decreases due to a handover can be reduced for the UE. For example, it is assumed that the UE does not obtain the first frequency domain resource set that takes effect in the target cell, and information such as an available bandwidth, a resource, and a transmission amount of the UE in the target cell is less than that in the source cell. In this case, after the UE is handed over from the source cell to the target cell, the throughput decreases.

FIG. 6 is a schematic flowchart of another frequency domain resource configuration method according to this application. The procedure specifically includes the following steps.

S401: A first network device sends a configuration request to a second network device. Correspondingly, the second network device receives the configuration request from the first network device.

The configuration request may be for requesting, from the second network device, a first frequency domain resource set that can take effect in a target cell, or for negotiating with the second network device to determine a first frequency domain resource set that can take effect in a target cell. The configuration request may also be described as a negotiation request, a handover configuration request, or the like.

The configuration request includes second configuration information, the second configuration information is for configuring a second frequency domain resource set, and the second frequency domain resource set takes effect in a source cell. In other words, before being handed over to the target cell, the UE uses the second frequency domain resource set in the source cell. For example, if DCI indicating a TCI state is received on a reference frequency domain resource in the second frequency domain resource set, communication is performed on all frequency domain resources in the second frequency domain resource set by using the TCI state. It may be understood that the first network device notifies the second network device of configuration information of the second frequency domain resource set that takes effect in the source cell, so that the second network device feeds back configuration information of the first frequency domain resource set to the first network device.

The second configuration information is further for configuring a reference frequency domain resource in the second frequency domain resource set, for example, is further for configuring a reference CC or a reference BWP in a second CC list.

Optionally, the second configuration information is further for configuring a TCI configuration of the second frequency domain resource set. The TCI configuration may act on the reference frequency domain resource. In this case, the same TCI configuration may be used for all second frequency domain resources in the second frequency domain resource set, so that configuration overheads can be reduced. The TCI configuration indicates whether an uplink and downlink joint TCI mode or a separate (separate) mode is used for the second frequency domain resource set. Optionally, the second configuration information is further for configuring a TCI state list (list) of each second frequency domain resource in the second frequency domain resource set. If no TCI state list is configured for a second frequency domain resource, the TCI state list of the second frequency domain resource may be a TCI state list of the reference frequency domain resource. The TCI state list may include one or more TCI states.

Optionally, the second configuration information includes configuration information of each frequency domain resource in the second frequency domain resource set, for example, configuration information of each CC. The configuration information of each CC may include one or more of the following: a PCI or a logical cell identifier associated with the PCI, uplink resource configuration information, downlink resource configuration information, frame structure configuration information, reference signal configuration information, synchronization signal configuration information, or the like. Alternatively, it is described as that the second configuration information is for configuring information about each second frequency domain resource in the second frequency domain resource, and the information may include one or more of the following: a PCI, an uplink resource, a downlink resource, a frame structure, a reference signal, a synchronization signal, or the like.

S402: The second network device sends a configuration response to the first network device. Correspondingly, the first network device receives the configuration response from the second network device.

The configuration response is for responding to the configuration request and includes third configuration information, where the third configuration information is for determining first configuration information.

The third configuration information fed back by the second network device to the first network device may be third configuration information in any one of the following manner 1 to manner 3.

Manner 1: The third configuration information includes the first configuration information. To be specific, the second network device feeds back the configuration information of the first frequency domain resource set to the first network device. For the first configuration information, refer to the specific descriptions of the first configuration information in step S301. Details are not described herein again.

Manner 2: The third configuration information includes some or all configuration information of the first configuration information, and a correspondence between a first frequency domain resource in the first frequency domain resource set and the second frequency domain resource in the second frequency domain resource set. The correspondence between the first frequency domain resource and the second frequency domain resource may be specifically a correspondence between configuration information of the first frequency domain resource and the configuration information of the second frequency domain resource. For example, refer to a diagram of a correspondence configuration shown in FIG. 7. In FIG. 7, there is a correspondence between configuration information of a CC#1 in a first CC list and configuration information of a CC#1 in a second CC list, and there is a correspondence between configuration information of a CC#2 in the first CC list and configuration information of a CC#2 in the second CC list. The configuration information of the CC#1 in the first CC list may be all configuration information of the CC#1, or may be some configuration information of the CC#1. The some configuration information may be configuration information different from that of the CC#1 in the second CC list. For example, a PCI of the CC#1 in the first CC list is equal to C, a PCI of the CC#1 in the second CC list is equal to D, and other configuration information is the same. In this case, the configuration information of the CC#1 in the first CC list may include PCI=C.

Manner 3: The third configuration information includes a correspondence between a first frequency domain resource in the first frequency domain resource set and the second frequency domain resource in the second frequency domain resource set, and unified update indication information. For the correspondence between the first frequency domain resource and the second frequency domain resource, refer to the descriptions of the correspondence in Manner 2. Details are not described herein again. The unified update indication information indicates whether the first frequency domain resource set is updated in a unified manner, in other words, whether the first frequency domain resource set may be updated along with a reference frequency domain resource in the first frequency domain resource set.

Manner 1 to Manner 3 are used as examples, and do not constitute limitations on this application.

Further, the first network device may adjust the second frequency domain resource set based on the information fed back by the second network device, to determine the first frequency domain resource set, and further send the first configuration information to the UE. Alternatively, the first network device forwards, to the UE, the third configuration information fed back by the second network device.

In the embodiment shown in FIG. 6, the first network device negotiates with the second network device, to determine the first frequency domain resource set that can take effect in the target cell.

In an optional embodiment, the first network device may further configure a TCI mode of the first frequency domain resource set, where the TCI mode may be explicitly configured or implicitly configured.

In an implementation, the first network device implicitly configures the TCI mode of the first frequency domain resource set. Before sending handover indication signaling to the UE, the first network device sends higher layer signaling to the UE. The higher layer signaling may be for configuring a TCI state list of the first frequency domain resource set, and the TCI state list may implicitly indicate whether the uplink and downlink joint TCI mode or the separate mode is used for the first frequency domain resource set. The higher layer signaling may be RRC signaling, and the handover indication signaling may be a MAC-CE. Optionally, the higher layer signaling may be the first configuration information. The UE may parse the higher layer signaling before the handover, or the UE needs to parse the higher layer signaling before the handover.

If the TCI state list configured by using the higher layer signaling includes an uplink TCI state, the UE may consider that the TCI mode of the first frequency domain resource set is the separate mode. Optionally, the handover indication signaling may indicate two TCI states. One of the TCI states is for uplink transmission, and the other TCI state is for downlink transmission. Optionally, the handover indication signaling may indicate one TCI state. If the TCI state is an uplink TCI state, the TCI state is for uplink transmission. If the TCI state is a downlink TCI state, the TCI state is for downlink transmission. The handover indication signaling may further include at least one field, and a value of the at least one field indicates that the handover indication signaling indicates the two TCI states or one TCI state. Optionally, if the two TCI states are indicated, the handover indication signaling may further include two fields, a value of one field indicates whether one of the TCI states is the uplink TCI state or the downlink TCI state, and a value of the other field indicates whether the other TCI state is the uplink TCI state or the downlink TCI state. If the one TCI state is indicated, the handover indication signaling may further include one field, and a value of the field indicates whether the TCI state is the uplink TCI state or the downlink TCI state. Optionally, the handover indication signaling may further include a downlink bandwidth part identifier and/or an uplink bandwidth part identifier (bandwidth part identifier, BWP ID), where the downlink bandwidth part identifier and/or the uplink bandwidth part identifier indicate/indicates one or more of the following information: a target BWP in which the TCI state takes effect, a BWP activated after the UE is handed over, or a TCI state list in a BWP configuration that a TCI state identified by a TCI state ID is from.

If the TCI state list configured by using the higher layer signaling includes only the downlink TCI state or the uplink and downlink joint TCI state, the UE may consider that the TCI mode of the first frequency domain resource set is the uplink and downlink joint TCI mode. Optionally, the handover indication signaling may indicate one TCI state, and the TCI state is for uplink transmission and downlink transmission. The TCI state is a unified TCI state. The unified TCI state may also be described as a unified beam, and may be for determining transmitting and receiving beams of a plurality of uplink and downlink channels/signals.

In other words, if the TCI state list visible before the handover is performed on the UE includes the uplink TCI state, the UE may consider that the TCI mode of the first frequency domain resource set is the separate mode. When sending the handover indication signaling, the first network device may indicate two TCI states (which are respectively for uplink and downlink) or one TCI state (for uplink or downlink). If the TCI state list visible before the handover is performed on the UE includes the downlink TCI state or the uplink and downlink joint TCI state, the UE may consider that the TCI mode of the first frequency domain resource set is the uplink and downlink joint TCI mode, and the first network device only needs to indicate one TCI state when sending the handover indication signaling. The TCI state is the unified beam.

In another implementation, the first network device explicitly configures the TCI mode of the first frequency domain resource set. Before sending the handover indication signaling to the UE, the first network device sends the higher layer signaling to the UE, where the higher layer signaling may include the TCI mode of the first frequency domain resource set. Optionally, the higher layer signaling may be first configuration information. The higher layer signaling is for configuring configuration information of a current serving cell, and the configuration information of the current serving cell includes the TCI mode of the first frequency domain resource set.

In other words, the first network device includes the TCI mode of the first frequency domain resource set in the configuration information of the current serving cell, that is, carries a TCI mode of a target cell group. The current serving cell is the source cell. It may be understood that the configuration information of the current serving cell carries the configuration information (including the TCI mode) of the first frequency domain resource set. The UE may parse, before the handover, the configuration information of the first frequency domain resource set carried in the configuration information of the current serving cell. Alternatively, the UE needs to parse, before the handover, the configuration information of the first frequency domain resource set carried in the configuration information of the current serving cell. In contrast, before the handover (to be specific, a cell to which the UE is to be handed over is not actually determined), the UE may obtain but does not need to parse configuration information of another frequency domain resource set, so that processing complexity of the UE is reduced.

In still another implementation, the same TCI mode may be used for all first frequency domain resources in the first frequency domain resource set.

Optionally, before sending handover indication signaling to the UE, the first network device sends higher layer signaling to the UE, where the higher layer signaling may include a TCI mode or a TCI state list of a first reference frequency domain resource. In other words, the higher layer signaling acts on the first frequency domain resource, and in this case, a TCI mode of the first frequency domain resource may be used for all the first frequency domain resources in the first frequency domain resource set.

Optionally, TCI indication information indicates the TCI state list, and the TCI indication signaling acts on the first reference frequency domain resource. In this case, the TCI state list may be used for all the first frequency domain resources in the first frequency domain resource set. A TCI mode corresponding to the TCI state list indicated by the TCI indication information is a TCI mode that can be used for all the first frequency domain resources. In addition, the first network device may preconfigure, for the UE by using RRC signaling, a reference signal in a TCI state corresponding to each first frequency domain resource. The preconfiguration means that preconfiguring before the first network device sends the handover indication signaling, the UE can decode the RRC signaling before the handover.

The name of the uplink TCI state is used as an example, and does not constitute limitations on this embodiment of this application. Another name, for example, a spatial relationship (spatial relationship), may be used for describing the uplink TCI state.

In an optional embodiment, the TCI indication information may indicate a plurality of TCI states. The TCI indication information is included in the handover indication signaling. In other words, the handover indication signaling includes the TCI indication information. That is, the handover indication signaling may indicate the cell handover and the plurality of TCI states. The plurality of TCI states may be for beam indications of a plurality of first frequency domain resources, or for beam indications of the first frequency domain resource set.

Optionally, the handover indication signaling may further indicate, in the plurality of TCI states, a TCI state corresponding to a primary cell in the first frequency domain resource set, in other words, indicate to switch a beam of the primary cell in the first frequency domain resource set to a beam corresponding to the TCI state. A correspondence between other first frequency domain resources and TCI states other than the TCI state in the plurality of TCI states may be based on an ascending sequence of numbers of the other first frequency domain resources. For example, the plurality of TCI states may indicate a TCI state 1 to a TCI state 4, the first frequency domain resource set includes a CC#1 to a CC#4 (where the CC#1 is the primary cell), and the handover indication signaling indicates that the TCI state 1 is for the CC#1. In this case, the CC#2 may correspond to the TCI state 2, the CC#3 may correspond to the TCI state 3, and the CC#4 may correspond to the TCI state 4. A quantity of CCs in the first frequency domain resource set may be the same as or different from a quantity of the plurality of TCI states. If the quantity of CCs in the first frequency domain resource set is greater than the quantity of the plurality of TCI states, last X CCs may correspond to a last TCI state, where X is an integer greater than or equal to 2. For example, last two CCs may correspond to the last TCI state.

Optionally, based on a sequence of the plurality of TCI states, the handover indication signaling further preferentially indicates TCI states of a plurality of CC groups, and then indicates a TCI state of an ungrouped CC. For example, the plurality of TCI states may indicate a TCI state 1 to a TCI state 3, the first frequency domain resource set includes a CC#1 to a CC#4, and the CC#1 and the CC#2 are a CC group 1. In this case, the CC group 1 corresponds to the TCI state 1, a CC#3 corresponds to a TCI state 2, and the CC#4 corresponds to the TCI state 3.

Optionally, the handover indication signaling further indicates whether a TCI state of a first frequency domain resource in the first frequency domain resource set exists. If the TCI state of the first frequency domain resource in the first frequency domain resource set does not exist, it is considered by default that the first frequency domain resource is not activated, and a default beam may be used for the first frequency domain resource; or the first frequency domain resource is activated, and a default beam is used. The default beam may be an SSB that is for timing advance and that is obtained by the UE, or an SSB for sending random access. Optionally, whether a first frequency domain resource is activated is indicated by another field in the handover indication signaling. If the first frequency domain resource is indicated to be activated, the default beam may be used for the first frequency domain resource.

In an optional embodiment, the UE may report capability information to the first network device. The capability information is for describing information about a maximum quantity of TCI configurations of a neighboring cell supported by the UE before the cell handover, or information about a maximum quantity of TCI configurations that can be configured for each of a plurality of neighboring cells and that is supported by the UE. The information about the quantity may include one or more of the following: a total quantity of TCI states, a quantity of CCs, or a quantity of CC groups. These may be further classified into uplink and downlink. For example, the total quantity of TCI states may be classified into a total quantity of uplink TCI states and a total quantity of downlink TCI states. Before sending the handover indication signaling, the first network device preconfigures a plurality of TCI states or a TCI state list for the UE based on the capability information. For example, the total quantity of TCI states is 128. In this case, the first network device may preconfigure one TCI state list for the UE, and the TCI state list may include 128 TCI states.

Optionally, if all TCI states indicated in the handover indication signaling are preconfigured TCI states, the UE may immediately make the TCI states in the handover indication signaling take effect. If there is a TCI state that is not preconfigured in the handover indication signaling, the UE may make the TCI state in the handover indication signaling take effect after a processing delay of the higher layer signaling.

It should be understood that in the foregoing embodiments, the terminal device and/or the network device may perform some or all of the steps in embodiments. These steps or operations are merely examples. Other operations or variations of various operations may be further performed in embodiments of this application. In addition, the steps may be performed in different sequences presented in embodiments, and not all operations in embodiments of this application may need to be performed. In addition, sequence numbers of the steps do not mean an execution sequence. An execution sequence of the processes should be determined based on functions and internal logic of the processes, and should not constitute any limitation on the implementation processes of embodiments of this application.

To implement the data transmission method provided in embodiments of this application, the terminal device and the network device may each include a hardware structure and a software module, and implement the foregoing functions in a form of the hardware structure, the software module, or a combination of the hardware structure and the software module. One of the foregoing various functions may be performed in the form of the hardware structure, the software module, or the combination of the hardware structure and the software module.

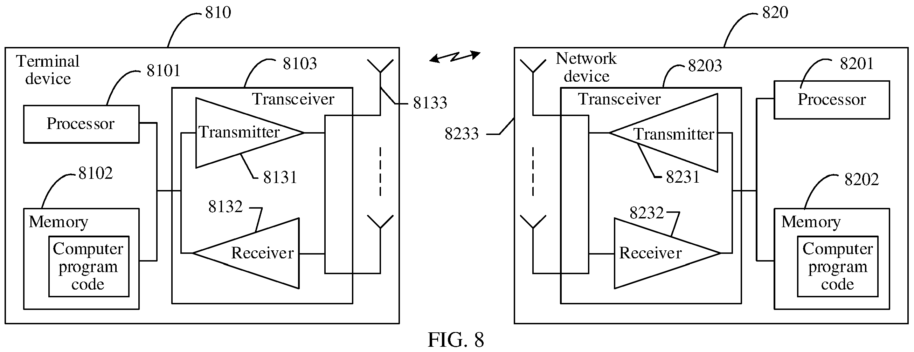

FIG. 8 shows a form of communication between a terminal device and a network device. As shown in FIG. 8, a terminal device 810 includes a processor 8101, a memory 8102, and a transceiver 8103. The transceiver 8103 includes a transmitter 8131, a receiver 8132, and an antenna 8133. A network device 820 includes a processor 8201, a memory 8202, and a transceiver 8203. The transceiver 8203 includes a transmitter 8231, a receiver 8232, and an antenna 8233. The receiver 8132 may be configured to receive, through the antenna 8133, a message sent by the network device 820, and the transmitter 8131 may be configured to send, through the antenna 8133, a message to the network device 820. The transmitter 8231 may be configured to send, through the antenna 8233, a message to the terminal device 810, and the receiver 8232 may be configured to receive, through the antenna 8233, a message sent by the terminal device 810.

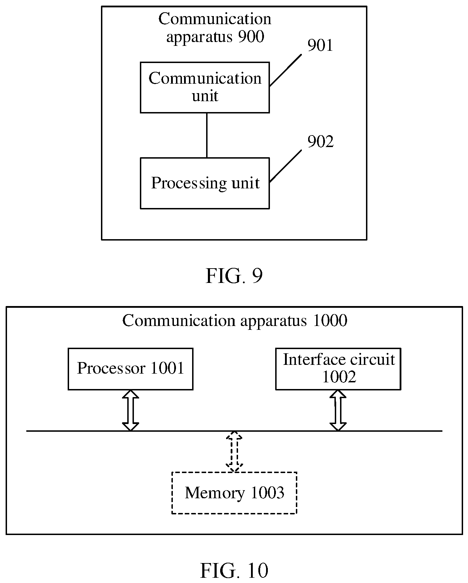

FIG. 9 and FIG. 10 are diagrams of structures of possible communication apparatuses according to embodiments of this application. The communication apparatuses may be configured to implement the functions of the terminal device or the network device in the foregoing method embodiments. Therefore, the beneficial effects of the foregoing method embodiments can also be implemented.

A communication apparatus 900 shown in FIG. 9 may include a communication unit 901 and a processing unit 902. The communication unit 901 may include a sending unit and/or a receiving unit. The sending unit is configured to implement a sending function, and the receiving unit is configured to implement a receiving function. The communication unit 901 may implement the sending function and/or the receiving function. The communication unit may also be described as a transceiver unit.

In an implementation, the communication apparatus 900 may be a terminal device, may be an apparatus in the terminal device, or may be an apparatus having a function of the terminal device. The communication apparatus 900 may alternatively be a chip or a chip system of the terminal device. In an implementation, the communication apparatus 900 may perform the related operations of the terminal device in the embodiment shown in FIG. 3.

The communication unit 901 is configured to: receive first configuration information from a first network device, where the first configuration information is for configuring a first frequency domain resource set, and the first frequency domain resource set takes effect after the terminal device is handed over from a source cell to a target cell; and receive handover indication signaling from the first network device, where the handover indication signaling indicates the handover from the source cell to the target cell.

The processing unit 902 is configured to determine an activated frequency domain resource based on the first frequency domain resource set.

Optionally, the first configuration information is further for configuring a type identifier of the first frequency domain resource set, and the type identifier identifies that the first frequency domain resource set takes effect after the terminal device is handed over from the source cell to the target cell.

Optionally, the first frequency domain resource set is a subset of a second frequency domain resource set, or the first frequency domain resource set is a second frequency domain resource set, and the second frequency domain resource set takes effect in the source cell.

Optionally, the communication unit 901 is further configured to receive TCI indication signaling from the first network device, where the TCI indication signaling is associated with the first frequency domain resource set, the TCI indication signaling indicates a TCI state, and the TCI state is associated with the target cell.

Optionally, the handover indication signaling is RRC signaling, and the TCI indication signaling is a first media access control-control element MAC-CE or first downlink control information DCI.

Optionally, the processing unit 902 is specifically configured to determine the activated frequency domain resource based on the first frequency domain resource set and the second frequency domain resource set.

Optionally, the TCI indication signaling is a second MAC-CE or second DCI, and the handover indication signaling is a third MAC-CE or third DCI; and the second MAC-CE is different from the third MAC-CE, and the second DCI is different from the third DCI.

Optionally, the handover indication signaling includes TCI indication signaling, the TCI indication signaling is associated with the first frequency domain resource set, the TCI indication signaling indicates a TCI state, and the TCI state is associated with the target cell; and the handover indication signaling is a fourth MAC-CE or fourth DCI.

Optionally, the handover indication signaling further indicates that a frequency domain resource in the first frequency domain resource set is activated or deactivated.

Optionally, the handover indication signaling includes a cell handover identifier, and the cell handover identifier indicates a cell handover, or indicates the handover to the target cell.

Optionally, the TCI indication signaling acts on a reference frequency domain resource in the first frequency domain resource set; and the processing unit 902 is specifically configured to determine that all frequency domain resources in the first frequency domain resource set are activated frequency domain resources.

The communication unit 901 is further configured to perform communication on all the frequency domain resources in the first frequency domain resource set by using the TCI state.

Optionally, the TCI indication signaling acts on a target frequency domain resource in the first frequency domain resource set, and the target frequency domain resource is a non-reference frequency domain resource; and the processing unit 902 is specifically configured to: determine that the target frequency domain resource is the activated frequency domain resource, and release a frequency domain resource other than the target frequency domain resource in the first frequency domain resource set.

The communication unit 901 is further configured to perform communication on the target frequency domain resource by using the TCI state.

In another implementation, the communication apparatus 900 may be a first network device, an apparatus in the first network device, or an apparatus having a function of the first network device. The communication apparatus 900 may alternatively be a chip or a chip system of the first network device. In an implementation, the communication apparatus 900 may perform the related operations of the first network device in the embodiment shown in FIG. 3 or FIG. 6.

The communication unit 901 is configured to: send first configuration information to a terminal device, where the first configuration information is for configuring a first frequency domain resource set, and the first frequency domain resource set takes effect after the terminal device is handed over from a source cell to a target cell; and send handover indication signaling to the terminal device, where handover indication information indicates the handover from the source cell to the target cell.

Optionally, the first configuration information is further for configuring a type identifier of the first frequency domain resource set, and the type identifier identifies that the first frequency domain resource set takes effect after the terminal device is handed over from the source cell to the target cell.

Optionally, the first frequency domain resource set is a subset of a second frequency domain resource set, or the first frequency domain resource set is a second frequency domain resource set, and the second frequency domain resource set takes effect in the source cell.

Optionally, the communication unit 901 is further configured to send TCI indication signaling to the terminal device, where the TCI indication signaling is associated with the first frequency domain resource set, the TCI indication signaling indicates a TCI state, and the TCI state is associated with the target cell.

Optionally, the handover indication signaling is RRC signaling, and the TCI indication signaling is a first MAC-CE or first DCI.

Optionally, the TCI indication signaling is a second MAC-CE or second DCI, and the handover indication signaling is a third MAC-CE or third DCI; and the second MAC-CE is different from the third MAC-CE, and the second DCI is different from the third DCI.

Optionally, the handover indication signaling includes TCI indication signaling, the TCI indication signaling is associated with the first frequency domain resource set, the TCI indication signaling indicates a TCI state, and the TCI state is associated with the target cell; and the handover indication signaling is a fourth MAC-CE or fourth DCI.

Optionally, the handover indication signaling further indicates that a frequency domain resource in the first frequency domain resource set is activated or deactivated.

Optionally, the handover indication signaling includes a cell handover identifier, and the cell handover identifier indicates a cell handover, or indicates the handover to the target cell.

Optionally, the communication unit 901 is further configured to: send a configuration request to a second network device, where the configuration request includes second configuration information, and the second configuration information is for configuring a second frequency domain resource set; and receive a configuration response from the second network device, where the configuration response includes third configuration information, and the third configuration information is for determining the first configuration information.

Optionally, the third configuration information includes the first configuration information; or the third configuration information includes some or all configuration information of the first configuration information, and a correspondence between a first frequency domain resource in the first frequency domain resource set and a second frequency domain resource in the second frequency domain resource set; or the third configuration information includes a correspondence between a first frequency domain resource in the first frequency domain resource set and a second frequency domain resource in the second frequency domain resource set, and unified update indication information, where the unified update indication information indicates whether the first frequency domain resource set is updated in a unified manner.

Optionally, the second configuration information is further for configuring a reference frequency domain resource in the second frequency domain resource set.

A communication apparatus 1000 shown in FIG. 10 may include a processor 1001 and an interface circuit 1002. The processor 1001 and the interface circuit 1002 are coupled to each other. It may be understood that the interface circuit 1002 may be an interface circuit or an input/output interface. Optionally, the communication apparatus 1000 may further include a memory 1003, configured to store instructions executed by the processor 1001, store input data required by the processor 1001 to run instructions, or store data generated after the processor 1001 runs instructions.

For example, the communication apparatus 1000 may be a terminal device; and the interface circuit 1002 is configured to perform step S301 and step S302 in FIG. 3.

For example, the communication apparatus 1000 may be a first network device; and the interface circuit 1002 is configured to perform S301 and S302 in FIG. 3, or perform step S401 and step S402 in FIG. 6.

When the communication apparatus is a chip used in the terminal device, the chip of the terminal device implements functions of the terminal device in the foregoing method embodiments. The chip receives information from another module (for example, a radio frequency module or an antenna) in the terminal device, where the information is sent by the first network device to the terminal device. Alternatively, the chip sends information to another module (for example, a radio frequency module or an antenna) in the terminal device, where the information is sent by the terminal device to the first network device.

When the communication apparatus is a chip used in the first network device, the chip of the first network device implements functions of the first network device in the foregoing method embodiment. The chip receives information from another module (for example, a radio frequency module or an antenna) in the first network device, where the information is sent by the terminal device to the network device. Alternatively, the chip sends information to another module (for example, a radio frequency module or an antenna) in the first network terminal device, where the information is sent by the first network device to the terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor. When sending information, a device (the terminal device or the network device) outputs the information through an interface circuit of a chip. When receiving information, the device inputs the information to the interface circuit of the chip.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disk-read only memory (compact disk-read only memory, CD-ROM), or any other form of storage medium well known in the art. For example, a storage medium is coupled to a processor, so that the processor can read information from the storage medium and write information into the storage medium. It is clear that the storage medium may be a component of the processor. The processor and the storage medium may be disposed in an ASIC. In addition, the ASIC may be located in a network device or a terminal device. It is clear that the processor and the storage medium may alternatively exist as discrete components in a network device or a terminal device.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, the procedures or functions in embodiments of this application are all or partially performed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

## Claims

1. A frequency domain resource configuration method, wherein the method comprises:
receiving first configuration information from a first network device, wherein the first configuration information is for configuring a first frequency domain resource set and/or an identifier of a target cell associated with the first frequency domain resource set, and the first frequency domain resource set is a frequency domain resource set that takes effect after a terminal device is handed over from a source cell to the target cell;
receiving handover indication signaling from the first network device, wherein the handover indication signaling indicates the handover from the source cell to the target cell; and
determining the first frequency domain resource set based on the target cell, wherein the first frequency domain resource set is a frequency domain resource set on which transmission configuration indicator TCI indication signaling takes effect.

2. The method according to claim 1, wherein the identifier of the target cell is a physical cell identifier PCI, a virtual cell identifier associated with the PCI, or a logical cell identifier associated with the PCI.

3. The method according to claim 1 or 2, wherein the method further comprises:
receiving the TCI indication signaling from the first network device, wherein the TCI indication signaling is associated with the first frequency domain resource set, the TCI indication signaling indicates a TCI state, and the TCI state is associated with the target cell, wherein
the TCI state is used by the terminal device to perform communication on all first frequency domain resources in the first frequency domain resource set.

4. The method according to any one of claims 1 to 3, wherein
the TCI indication signaling is a second MAC-CE, and the handover indication signaling is a third MAC-CE; or
the handover indication signaling comprises the TCI indication signaling, the handover indication signaling is a fourth MAC-CE, and the handover indication signaling further comprises the identifier of the target cell.

5. The method according to any one of claims 1 to 4, wherein
the first configuration information further comprises configuration information of each first frequency domain resource in the first frequency domain resource set, and the configuration information of each first frequency domain resource comprises one or more of the following: the PCI or the logical cell identifier associated with the PCI, uplink resource configuration information, downlink resource configuration information, frame structure configuration information, reference signal configuration information, or synchronization signal configuration information.

6. The method according to any one of claims 1 to 5, wherein
the first configuration information is further for configuring a TCI mode of the first frequency domain resource set.

7. The method according to claim 6, wherein the first configuration information further comprises a TCI state list of the first frequency domain resource set, wherein
the TCI state list comprises an uplink TCI state, indicating that the TCI mode of the first frequency domain resource set is a separate mode; or
the TCI state list comprises an uplink and downlink joint TCI state, indicating that the TCI mode of the first frequency domain resource set is a joint mode.

8. The method according to claim 6, wherein the first configuration information further comprises the TCI mode of the first frequency domain resource set, and the TCI mode is a separate mode or a joint mode.

9. The method according to any one of claims 1 to 8, wherein
the handover indication signaling further comprises an activation indication field, and the activation indication field indicates that a frequency domain resource in the first frequency domain resource set is activated or deactivated after the handover to the target cell.

10. The method according to any one of claims 1 to 8, wherein the first configuration information acts on a first reference frequency domain resource in the first frequency domain resource set, and TCI modes of all the first frequency domain resources in the first frequency domain resource set are the same as a TCI mode of the first reference frequency domain resource.

11. The method according to any one of claims 1 to 8, wherein the handover indication signaling comprises TCI indication information, and the TCI indication information indicates, in a plurality of TCI states, a TCI state corresponding to a primary cell in the first frequency domain resource set.

12. The method according to any one of claims 1 to 8, wherein before the handover from the source cell to the target cell, an identifier of a frequency domain resource in the first frequency domain resource set is an identifier of a secondary cell when the source cell serves as a primary cell; and after the handover from the source cell to the target cell, the identifier of the frequency domain resource in the first frequency domain resource set is an identifier of a secondary cell when the target cell serves as a primary cell.

13. The method according to any one of claims 1 to 12, wherein the method further comprises:
sending capability information to the first network device, wherein the capability information indicates maximum information supported by the terminal device before the handover from the source cell to the target cell, and the information comprises one or more of the following: information about a quantity of TCI configurations of a neighboring cell, information about a quantity of TCI configurations that can be configured for each of a plurality of neighboring cells, a quantity of first frequency domain resource sets, a quantity of first frequency domain resources in the first frequency domain resource set, a total quantity of uplink TCI states, or a total quantity of downlink TCI states.

14. A frequency domain resource configuration method, wherein the method further comprises:
sending first configuration information to a terminal device, wherein the first configuration information is for configuring a first frequency domain resource set and/or an identifier of a target cell associated with the first frequency domain resource set, and the first frequency domain resource set is a frequency domain resource set that takes effect after the terminal device is handed over from a source cell to the target cell; and
sending handover indication signaling to the terminal device, wherein handover indication information indicates the handover from the source cell to the target cell.

15. The method according to claim 14, wherein the identifier of the target cell is a PCI, a virtual cell identifier associated with the PCI, or a logical cell identifier associated with the PCI.

16. The method according to claim 14 or 15, wherein the method further comprises:
sending TCI indication signaling to the terminal device, wherein the TCI indication signaling is associated with the first frequency domain resource set, the TCI indication signaling indicates a TCI state, and the TCI state is associated with the target cell, wherein the TCI state is used by the terminal device to perform communication on all first frequency domain resources in the first frequency domain resource set.

17. The method according to any one of claims 14 to 16, wherein
the TCI indication signaling is a second MAC-CE, and the handover indication signaling is a third MAC-CE; or
the handover indication signaling comprises the TCI indication signaling, the handover indication signaling is a fourth MAC-CE, and the handover indication signaling further comprises the identifier of the target cell.

18. The method according to any one of claims 14 to 17, wherein
the first configuration information further comprises configuration information of each first frequency domain resource in the first frequency domain resource set, and the configuration information of each first frequency domain resource comprises one or more of the following: the PCI or the logical cell identifier associated with the PCI, uplink resource configuration information, downlink resource configuration information, frame structure configuration information, reference signal configuration information, or synchronization signal configuration information.

19. The method according to any one of claims 14 to 18, wherein
the first configuration information is further for configuring a TCI mode of the first frequency domain resource set.

20. The method according to claim 19, wherein the first configuration information further comprises a TCI state list of the first frequency domain resource set, wherein
the TCI state list comprises an uplink TCI state, indicating that the TCI mode of the first frequency domain resource set is a separate mode; or
the TCI state list comprises an uplink and downlink joint TCI state, indicating that the TCI mode of the first frequency domain resource set is a joint mode.

21. The method according to claim 19, wherein the first configuration information further comprises the TCI mode of the first frequency domain resource set, and the TCI mode is a separate mode or a joint mode.

22. The method according to any one of claims 14 to 21, wherein
the handover indication signaling further comprises an activation indication field, and the activation indication field indicates that a frequency domain resource in the first frequency domain resource set is activated or deactivated after the handover to the target cell.

23. The method according to any one of claims 14 to 21, wherein the first configuration information acts on a first reference frequency domain resource in the first frequency domain resource set, and TCI modes of all the first frequency domain resources in the first frequency domain resource set are the same as a TCI mode of the first reference frequency domain resource.

24. The method according to any one of claims 14 to 21, wherein the handover indication signaling comprises TCI indication information, and the TCI indication information indicates, in a plurality of TCI states, a TCI state corresponding to a primary cell in the first frequency domain resource set.

25. The method according to any one of claims 14 to 21, wherein before the handover from the source cell to the target cell, an identifier of a frequency domain resource in the first frequency domain resource set is an identifier of a secondary cell when the source cell serves as a primary cell; and after the handover from the source cell to the target cell, the identifier of the frequency domain resource in the first frequency domain resource set is an identifier of a secondary cell when the target cell serves as a primary cell.

26. The method according to any one of claims 14 to 25, wherein the method further comprises:
sending capability information to a first network device, wherein the capability information indicates maximum information supported by the terminal device before the handover from the source cell to the target cell, and the information comprises one or more of the following: information about a quantity of TCI configurations of a neighboring cell, information about a quantity of TCI configurations that can be configured for each of a plurality of neighboring cells, a quantity of first frequency domain resource sets, a quantity of first frequency domain resources in the first frequency domain resource set, a total quantity of uplink TCI states, or a total quantity of downlink TCI states.

27. The method according to any one of claims 14 to 26, wherein the method further comprises:
sending a configuration request to a second network device, wherein the configuration request is for requesting the first frequency domain resource set that takes effect in the target cell;
receiving a configuration response from the second network device, wherein the second configuration response comprises third configuration information; and
determine the first configuration information based on the third configuration information.

28. The method according to claim 27, wherein the configuration request comprises second configuration information, the second configuration information is for configuring a second frequency domain resource set, and the second frequency domain resource set takes effect in the source cell.

29. A frequency domain resource configuration method, wherein the method comprises:
receiving first configuration information from a first network device, wherein the first configuration information is for configuring a first frequency domain resource set, and the first frequency domain resource set takes effect after a terminal device is handed over from a source cell to a target cell;
receiving handover indication signaling from the first network device, wherein the handover indication signaling indicates the handover from the source cell to the target cell; and
determining an activated frequency domain resource based on the first frequency domain resource set.

30. The method according to claim 29, wherein the method further comprises:
receiving TCI indication signaling from the first network device, wherein the TCI indication signaling is associated with the first frequency domain resource set, the TCI indication signaling indicates a TCI state, and the TCI state is associated with the target cell.

31. The method according to claim 30, wherein the handover indication signaling is radio resource control RRC signaling, and the TCI indication signaling is a first media access control-control element MAC-CE or first downlink control information DCI.

32. The method according to claim 30, wherein the TCI indication signaling is a second MAC-CE or second DCI, and the handover indication signaling is a third MAC-CE or third DCI; and the second MAC-CE is different from the third MAC-CE, and the second DCI is different from the third DCI.

33. The method according to claim 29, wherein the handover indication signaling comprises TCI indication signaling, the TCI indication signaling is associated with the first frequency domain resource set, the TCI indication signaling indicates a TCI state, and the TCI state is associated with the target cell; and the handover indication signaling is a fourth MAC-CE or fourth DCI.

34. The method according to claim 32 or 33, wherein the handover indication signaling further indicates that a frequency domain resource in the first frequency domain resource set is activated or deactivated.

35. The method according to claim 32 or 33, wherein the handover indication signaling comprises a cell handover identifier, and the cell handover identifier indicates a cell handover, or indicates the handover to the target cell.

36. The method according to claim 32 or 33, wherein the determining an activated frequency domain resource based on the first frequency domain resource set comprises:
determining that all frequency domain resources in the first frequency domain resource set are activated frequency domain resources, wherein the TCI indication signaling acts on a reference frequency domain resource in the first frequency domain resource set; and
the method further comprises:
performing communication on all the frequency domain resources in the first frequency domain resource set by using the TCI state.

37. The method according to claim 32 or 33, wherein the determining an activated frequency domain resource based on the first frequency domain resource set comprises:
determining that a target frequency domain resource is the activated frequency domain resource, and releasing a frequency domain resource other than the target frequency domain resource in the first frequency domain resource set, wherein the TCI indication signaling acts on the target frequency domain resource in the first frequency domain resource set, and the target frequency domain resource is a non-reference frequency domain resource; and
the method comprises:
performing communication on the target frequency domain resource by using the TCI state.

38. The method according to any one of claims 29 to 33, wherein the determining an activated frequency domain resource based on the first frequency domain resource set comprises:
determining the activated frequency domain resource based on the first frequency domain resource set and a second frequency domain resource set, wherein the second frequency domain resource set takes effect in the source cell.

39. A frequency domain resource configuration method, wherein the method comprises:
sending first configuration information to a terminal device, wherein the first configuration information is for configuring a first frequency domain resource set, and the first frequency domain resource set takes effect after the terminal device is handed over from a source cell to a target cell; and
sending handover indication signaling to the terminal device, wherein handover indication information indicates the handover from the source cell to the target cell.

40. The method according to claim 39, wherein the method further comprises:
sending TCI indication signaling to the terminal device, wherein the TCI indication signaling is associated with the first frequency domain resource set, the TCI indication signaling indicates a TCI state, and the TCI state is associated with the target cell.

41. The method according to claim 40, wherein the handover indication signaling is RRC signaling, and the TCI indication signaling is a first MAC-CE or first DCI.

42. The method according to claim 40, wherein the TCI indication signaling is a second MAC-CE or second DCI, and the handover indication signaling is a third MAC-CE or third DCI; and the second MAC-CE is different from the third MAC-CE, and the second DCI is different from the third DCI.

43. The method according to claim 39, wherein the handover indication signaling comprises TCI indication signaling, the TCI indication signaling is associated with the first frequency domain resource set, the TCI indication signaling indicates a TCI state, and the TCI state is associated with the target cell; and the handover indication signaling is a fourth MAC-CE or fourth DCI.

44. The method according to claim 42 or 43, wherein the handover indication signaling further indicates that a frequency domain resource in the first frequency domain resource set is activated or deactivated.

45. The method according to claim 42 or 43, wherein the handover indication signaling comprises a cell handover identifier, and the cell handover identifier indicates a cell handover, or indicates the handover to the target cell.

46. The method according to any one of claims 39 to 43, wherein before the sending first configuration information to a terminal device, the method further comprises:
sending a configuration request to a second network device, wherein the configuration request comprises second configuration information, the second configuration information is for configuring a second frequency domain resource set, and the second frequency domain resource set takes effect in the source cell; and
receiving a configuration response from the second network device, wherein the configuration response comprises third configuration information, and the third configuration information is for determining the first configuration information.

47. The method according to claim 46, wherein the third configuration information comprises the first configuration information; or the third configuration information comprises some or all configuration information of the first configuration information, and a correspondence between a first frequency domain resource in the first frequency domain resource set and a second frequency domain resource in the second frequency domain resource set; or the third configuration information comprises a correspondence between a first frequency domain resource in the first frequency domain resource set and a second frequency domain resource in the second frequency domain resource set, and unified update indication information, wherein the unified update indication information indicates whether the first frequency domain resource set is updated in a unified manner.

48. A frequency domain resource configuration method, wherein the method comprises:
receiving first configuration information from a first network device, wherein the first configuration information is for configuring a first frequency domain resource set, and the first frequency domain resource set takes effect after a terminal device is handed over from a source cell to a target cell; and
receiving handover indication signaling from the first network device, wherein the handover indication signaling indicates the handover from the source cell to the target cell.

49. The method according to claim 48, wherein the first configuration information comprises a TCI state list of the first frequency domain resource set, wherein
the TCI state list comprises an uplink TCI state, indicating that a TCI mode of the first frequency domain resource set is a separate mode; or
the TCI state list comprises a downlink TCI state and/or an uplink and downlink joint TCI state, indicating that a TCI mode of the first frequency domain resource set is the separate mode.

50. The method according to claim 48, wherein the first configuration information comprises a TCI mode of the first frequency domain resource set.

51. The method according to claim 50, wherein the first configuration information is configuration information of the source cell.

52. The method according to any one of claims 48 to 51, wherein the first configuration information acts on a first reference frequency domain resource in the first frequency domain resource set, and TCI modes of all first frequency domain resources in the first frequency domain resource set are the same as a TCI mode of the first reference frequency domain resource.

53. The method according to any one of claims 48 to 51, wherein the handover indication signaling comprises TCI indication information, and the TCI indication information indicates a plurality of TCI states.

54. The method according to claim 53, wherein the TCI indication information further indicates, in the plurality of TCI states, a TCI state corresponding to a primary cell in the first frequency domain resource set.

55. The method according to claim 53, wherein the method further comprises:
the TCI indication information further indicates that a TCI state of a first frequency domain resource in the first frequency domain resource set does not exist, skipping activating the first frequency domain resource, wherein the first frequency domain resource corresponds to a default beam; or activating the first frequency domain resource, wherein the first frequency domain resource corresponds to a default beam.

56. The method according to claims 48 to 55, wherein the method further comprises:
sending capability information to the first network device, wherein the capability information indicates information supported before the handover from the source cell to the target cell, and the information comprises information about a quantity of TCI configurations of a neighboring cell and/or information about a quantity of TCI configurations that can be configured for each of a plurality of neighboring cells.

57. The method according to any one of claims 48 to 56, wherein the method further comprises:
determining an activated frequency domain resource based on the first frequency domain resource set.

58. A frequency domain resource configuration method, wherein the method comprises:
sending first configuration information to a terminal device, wherein the first configuration information is for configuring a first frequency domain resource set, and the first frequency domain resource set takes effect after the terminal device is handed over from a source cell to a target cell; and
sending handover indication signaling to the terminal device, wherein the handover indication signaling indicates the handover from the source cell to the target cell.

59. The method according to claim 58, wherein the first configuration information comprises a TCI state list of the first frequency domain resource set, wherein
the TCI state list comprises an uplink TCI state, indicating that a TCI mode of the first frequency domain resource set is a separate mode; or
the TCI state list comprises a downlink TCI state and/or an uplink and downlink joint TCI state, indicating that a TCI mode of the first frequency domain resource set is the separate mode.

60. The method according to claim 59, wherein the first configuration information comprises the TCI mode of the first frequency domain resource set.

61. The method according to claim 60, wherein the first configuration information is configuration information of the source cell.

62. The method according to any one of claims 58 to 61, wherein the first configuration information acts on a first reference frequency domain resource in the first frequency domain resource set, and TCI modes of all first frequency domain resources in the first frequency domain resource set are the same as a TCI mode of the first reference frequency domain resource.

63. The method according to any one of claims 58 to 61, wherein the handover indication signaling comprises TCI indication information, and the TCI indication information indicates a plurality of TCI states.

64. The method according to claim 63, wherein the TCI indication information further indicates, in the plurality of TCI states, a TCI state corresponding to a primary cell in the first frequency domain resource set.

65. The method according to claims 58 to 64, wherein the method further comprises:
receiving capability information from the terminal device, wherein the capability information indicates information supported before the handover from the source cell to the target cell, and the information comprises information about a quantity of TCI configurations of a neighboring cell and/or information about a quantity of TCI configurations that can be configured for each of a plurality of neighboring cells.

66. A communication apparatus, comprising a module configured to perform the method according to any one of claims 1 to 13, or comprising a module configured to perform the method according to any one of claims 14 to 28, or comprising a module configured to perform the method according to any one of claims 29 to 38, or comprising a module configured to perform the method according to any one of claims 39 to 47, or comprising a module configured to perform the method according to any one of claims 48 to 57, or comprising a module configured to perform the method according to any one of claims 58 to 65.

67. A communication apparatus, comprising a processor, wherein the processor is configured to perform the method according to any one of claims 1 to 13, or the method according to any one of claims 14 to 28, or the method according to any one of claims 29 to 38, or the method according to any one of claims 39 to 47, or the method according to any one of claims 48 to 57, or the method according to any one of claims 58 to 65.

68. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement, by using a logic circuit or executing code instructions, the method according to any one of claims 1 to 13, or the method according to any one of claims 14 to 28, or the method according to any one of claims 29 to 38, or the method according to any one of claims 39 to 47, or the method according to any one of claims 48 to 57, or the method according to any one of claims 58 to 65.

69. A computer-readable storage medium, wherein the storage medium stores a computer program or instructions, and when the computer program or instructions are executed by a communication apparatus, the method according to any one of claims 1 to 13 is implemented, or the method according to any one of claims 14 to 28 is implemented, or the method according to any one of claims 29 to 38 is implemented, or the method according to any one of claims 39 to 47 is implemented, or the method according to any one of claims 48 to 57 is implemented, or the method according to any one of claims 58 to 65 is implemented.
